# NEUE EUROPÄISCHE PATENTSCHRIFT

(11) **EP 3 606 690 B2**
(45) Veröffentlichungstag und Bekanntmachung des Hinweises auf die Entscheidung über den Einspruch: **14.01.2026**
(45) Hinweis auf die Patenterteilung: 09.06.2021
(21) Anmeldenummer: 18717009.7
(22) Anmeldetag: 05.04.2018
(51) Int. Cl.: B22C 1/02, B22C 1/16, B22C 1/18, B22C 5/04, B22C 5/10, B22C 7/06, B22C 9/12, B22C 21/00, B22D 29/00

(54) **VERFAHREN ZUR HERSTELLUNG VON GIESSFORMEN, KERNEN UND DARAUS REGENERIERTEN FORMGRUNDSTOFFEN**
METHOD FOR PRODUCING CASTING MOLDS, CORES AND BASIC MOLD MATERIALS REGENERATED THEREFROM
PROCÉDÉ DE PRODUCTION DE MOULES DE COULÉE, DE NOYAUX ET DE MATIÈRES DE BASE DE MOULAGE RÉGÉNÉRÉES À PARTIR DE CES DERNIERS

(30) Priorität: 07.04.2017 DE 102017107531
(43) Veröffentlichungstag der Anmeldung: 12.02.2020
(73) Patentinhaber: HÜTTENES-ALBERTUS Chemische Werke Gesellschaft mit beschränkter Haftung, 40549 Düsseldorf (DE)
(72) Erfinder: REINOLD, Lukas Mirko, 30449 Hannover (DE); SCHWEINEFUSS, Maria, 30163 Hannover (DE); LUSTIG, Christian, 40211 Düsseldorf (DE)
(74) Vertreter: Eisenführ Speiser
(86) Internationale Anmeldenummer: PCT/EP2018/058793
(87) Internationale Veröffentlichungsnummer: WO 2018/185251

(56) Entgegenhaltungen:
- EP-A1- 2 308 614
- WO-A1-94/26439
- DE-A1- 102012 113 074
- N.N.: "Argical-M 1200S", 24 July 2008 (2008-07-24), XP055476396, Retrieved from the Internet <URL:http://www.imerys-oilfieldsolutions.com/images/products/pdfs/AGS_Argical-1200S.pdf> [retrieved on 20180517]

## Beschreibung

Die vorliegende Erfindung betrifft ein Verfahren zur Herstellung von Gießformen, Kernen und daraus regenerierten Formgrundstoffen, eine Mischung zur Kombination mit einer Lösung oder Dispersion umfassend Wasserglas, zur Herstellung von Gießformen und/oder Kernen, eine Formstoffmischung, eine Formgrundstoffmischung sowie eine Gießform oder einen Kern. Die Erfindung betrifft ferner die entsprechende Verwendung einer erfindungsgemäßen Mischung als Additiv zur Herstellung einer Wasserglas und partikuläres, amorphes Siliziumdioxid umfassenden Formstoffmischung, die durch chemische Reaktion von Bestandteilen der Formstoffmischung miteinander ausgehärtet wird, bei der Herstellung einer Gießform oder eines Kerns, zum Erleichtern des Zerfalls und/oder zum Erhöhen der Regenerierbarkeit der Gießform bzw. des Kerns.

Das Gießen in einer verlorenen Form ist ein verbreitetes Verfahren zur Herstellung endkonturnaher Bauteile. Nach dem Guss wird die Form zerstört, und das Gussstück wird entnommen. Gießformen sind Negative, sie enthalten den auszugießenden Hohlraum, der das zu fertigende Gussstück ergibt. Die Innenkonturen des zukünftigen Gussstückes werden durch Kerne gebildet. Bei der Herstellung der Gießform wird mittels eines Modells des zu fertigenden Gussstücks der Hohlraum in den Formstoff geformt. Innenkonturen werden durch Kerne dargestellt, die in einem separaten Kernkasten geformt werden.

Für Gießformen und Kerne werden als Formstoffe überwiegend feuerfeste körnige Stoffe wie z.B. gewaschener, klassifizierter Quarzsand verwendet. Der feuerfeste Formgrundstoff liegt bevorzugt in einer rieselfähigen Form vor, so dass er in eine geeignete Hohlform eingefüllt und dort verdichtet werden kann. Die Formstoffe werden verdichtet, um die Festigkeit zu erhöhen. Zur Herstellung der Gießformen werden die Formstoffe mit anorganischen oder organischen Bindemitteln gebunden. Durch das Bindemittel wird ein fester Zusammenhalt zwischen den Partikeln des Formgrundstoffs erzeugt, so dass die Gießform die erforderliche mechanische Stabilität erhält.

Gießformen und Kerne müssen verschiedene Anforderungen erfüllen. Beim Gießvorgang selbst müssen sie zunächst eine ausreichende Festigkeit und Temperaturbeständigkeit aufweisen, um das flüssige Metall in den aus einem oder mehreren Gieß(teil)formen gebildeten Hohlraum aufnehmen zu können. Nach Beginn des Erstarrungsvorgangs wird die mechanische Stabilität des Gussstücks durch eine erstarrte Metallschicht gewährleistet, die sich entlang der Wände der Gießform ausbildet. Das Material der Gießform soll sich nun unter dem Einfluss der vom Metall abgegebenen Hitze in der Weise zersetzen, dass es seine mechanische Festigkeit verliert, also der Zusammenhalt zwischen einzelnen Partikeln des feuerfesten Materials aufgehoben wird. Im Idealfall zerfallen die Gießformen und Kerne wieder zu einem feinen Sand, der sich mühelos vom Gussstück entfernen lässt und besitzen entsprechend günstige Zerfallseigenschaften. Es besteht heutzutage ein besonderes Bedürfnis danach, die zerfallenen Reste benutzter Gießformen und Kerne wiederzuverwerten und aus benutzten Gießformen und Kernen regenerierte Formgrundstoffe herzustellen. Diese Wiederverwertung als regenerierter Formgrundstoff (Regenerat) stellt besondere Anforderungen an die Zerfallseigenschaften der Gießformen und Kerne.

Zur Herstellung von Gießformen können sowohl organische als auch anorganische Bindemittel eingesetzt werden, deren Aushärtung jeweils durch kalte oder heiße Verfahren erfolgen kann. Als kalte Verfahren bezeichnet man dabei Verfahren, welche im Wesentlichen bei Raumtemperatur ohne Erhitzen der Gießform durchgeführt werden. Die Aushärtung erfolgt dabei meist durch eine chemische Reaktion, die beispielsweise dadurch ausgelöst wird, dass ein Gas als Katalysator durch die zu härtende Gießform geleitet wird. Bei heißen Verfahren wird die Formstoffmischung nach der Formgebung auf eine ausreichend hohe Temperatur erhitzt, um beispielsweise das im Bindemittel enthaltene Lösungsmittel auszutreiben oder um eine chemische Reaktion zu initiieren, durch welche das Bindemittel beispielsweise durch Vernetzen ausgehärtet wird.

Unabhängig vom Aushärtemechanismus ist allen organischen Bindemittel-Systemen gemeinsam, dass sie sich beim Einfüllen des flüssigen Metalls in die Gießform thermisch zersetzen und dabei Schadstoffe, wie z. B. Benzol, Toluol, Xylole, Phenol, Formaldehyd und andere, teilweise nicht identifizierte, Crackprodukte freisetzen können. Es ist zwar durch verschiedene Maßnahmen gelungen, diese Emissionen zu minimieren, völlig vermeiden lassen sie sich bei organischen Bindemitteln jedoch nicht.

Um die Emission von Zersetzungsprodukten während des Gießvorgangs zu minimieren bzw. zu vermeiden, können Bindemittel verwendet werden, die auf anorganischen Materialien beruhen bzw. die einen sehr geringen Anteil an organischen Verbindungen enthalten. Solche Bindemittelsysteme sind bereits seit längerem bekannt, beispielsweise aus der GB 782205 A, US 6972059 B1, US 5582232 A, US 5474606 A und US 7022178. Nachfolgend bezeichnet der Begriff "anorganisches Bindemittel" ein Bindemittel, welches zu mehr als 95 Gew.-%, vorzugsweise mehr als 99 Gew.-%, aus Wasser und anorganischen Materialien besteht, so dass der Anteil an organischen Verbindungen in einem anorganischen Bindemittel kleiner als 5 Gew.-%, vorzugsweise kleiner als 1 Gew.-% ist. Der Ausdruck "anorganisch gebunden" bedeutet, dass eine Gießform bzw. ein Kern unter Verwendung eines anorganischen Bindemittels hergestellt wurde.

Von besonderer Bedeutung als Bestandteil anorganischer Bindemittel ist Alkaliwasserglas. Als Alkaliwasserglas, nachfolgend auch Wasserglas genannt, werden aus einer Schmelze erstarrte, glasartige, also amorphe, wasserlösliche Natrium-, Kalium- und Lithiumsilicate oder ihre wässrigen Lösungen bezeichnet. Nachfolgend bezeichnet der Begriff Wasserglas solche Mischungen, die einen molaren Modul SiO₂/M₂O im Bereich von 1,6 bis 4,0, vorzugsweise im Bereich von 1,8 bis 2,5 aufweisen, wobei M₂O die Gesamtmenge an Lithium-, Natrium- und Kaliumoxid bezeichnet. Der Ausdruck "wasserglasgebunden" bedeutet, dass eine Gießform bzw. ein Kern unter Verwendung eines Bindemittels hergestellt wurden, welches Wasserglas umfasst.

Anorganisch bindende Formstoffmischungen sind im Stand der Technik bekannt. Beispielsweise wird in der US 7770629 B2 eine Formstoffmischung vorgeschlagen, welche neben einem feuerfesten Formgrundstoff ein auf Wasserglas basierendes Bindemittel und ein teilchenförmiges Metalloxid umfasst, wobei als teilchenförmiges Metalloxid bevorzugt Fällungskieselsäure oder pyrogene Kieselsäure verwendet wird.

Die US 4233076 offenbart Formstoffmischungen bestehend aus Sand, einem Alkalisilikat-Binder, mindestens einem Härter, welcher ausgewählt ist aus der Gruppe von Alkylencarbonat, einer organischen Monocarbon- oder Dicarbonsäure bzw. deren Methylester, Kohlendioxid oder Hochofenschlacke, sowie einem Al₂O₃ haltigen Stoff, dessen durchschnittliche Korngrößenverteilung zwischen 0,2 und 5 µm liegt.

Die DE 102012113073 A1 offenbart eine Formstoffmischung zur Herstellung von Formen und Kernen für die Metallverarbeitung, umfassend mindestens einen feuerfesten Formgrundstoff, ein anorganisches Bindemittel und zumindest ein partikuläres Metalloxid, wobei das partikuläre Metalloxid zumindest ein Aluminiumoxid in der alpha-Phase und/oder zumindest ein Aluminium/Silizium-Mischoxid, ausgenommen Aluminium/Silizium-Mischoxide mit Schichtsilikat-Struktur umfasst oder daraus besteht.

Die DE 10 2012113074 A1 offenbart eine Formstoffmischung zur Herstellung von Formen und Kernen für die Metallverarbeitung, umfassend mindestens einen feuerfesten Formgrundstoff, ein anorganisches Bindemittel und zumindest ein partikuläres gemischtes Metalloxid, wobei das gemischte partikuläre Metalloxid zumindest ein partikuläres Mischoxid oder eine partikuläre Mischung von zumindest zwei Oxiden ist oder zumindest ein partikuläres Mischoxid neben zumindest einem weiteren partikulären Oxid oder neben zumindest einem weiteren anderen partikulären Mischoxid vorliegt, und das partikuläre gemischte Metalloxid zumindest ein Oxid des Aluminiums und zumindest ein Oxid des Zirkoniums umfasst.

Die Zerfallseigenschaften von Gießformen und Kernen (auch als Entkernverhalten bezeichnet), d.h. die Fähigkeit der Gießformen und Kerne, nach dem Metallguss unter mechanischer Belastung schnell in eine leicht schüttfähige Form zu zerfallen, sind bei rein anorganisch gebundenen Gießformen und Kernen, insbesondere wasserglasgebundenen Gießformen und Kernen, häufig schlechter als bei Gießformen und Kernen, die mit einem organischen Bindemittel hergestellt wurden. Diese nachteiligen Zerfallseigenschaften werden üblicherweise dadurch erklärt, dass es durch die hohen Temperaturen beim Abguss vom Metallschmelzen zu einer Versinterung der alkalisilkatglashaltigen Formstoffzusammensetzung bzw. zur Ausbildung von Schmelzphasen kommt. Dies resultiert in einer hohen Restfestigkeit der Gießformen und Kerne. Eine wichtige Bedeutung wird dabei häufig dem Alkaligehalt der Formstoffmischung zugemessen, wobei hohe Alkaligehalte häufig als nachteilig angesehen werden.

Schlechte Zerfallseigenschaften sind besonders dann nachteilig, wenn dünnwandige bzw. filigrane oder komplexe Gießformen verwendet werden, welche sich nach dem Abguss häufig ohnehin schwer entfernen lassen. Insbesondere sind die schlechten Zerfallseigenschaften hinderlich bei dem Bestreben, anorganisch gebundene Gießformen und Kerne, die bereits beim Abguss eingesetzt wurden, wiederzuverwerten und aus solchen Gießformen und Kernen regenerierte Formgrundstoffe (Regenerate) herzustellen. Mangelhafte Zerfallseigenschaften können darin resultieren, dass der erhaltene regenerierte Formgrundstoff in verklumpter Form vorliegt und nicht hinreichend rieselfähig ist, um allein oder in Kombination mit "frischem" Ausgangsformgrundstoff erneut bei der Herstellung von Gießformen und Kernen eingesetzt zu werden. Ein Verfahren zum Herstellen einer partikulären Feuerfestzusammensetzung zur Verwendung bei der Herstellung von Gießereiformen und -kernen aus verbrauchten Gießereiformen oder -kernen, die aus einem Feuerfestmaterial und einem alkalischen Bindemittel hergestellt sind, welches Alkalimetallionen enthält, ist in der EP 2692460 B1 offenbart.

Es ist zur Lösung des Problems der schlechten Zerfallseigenschaften bekannt, der Formstoffmischung organische Zerfallsförderer zuzugeben, die unter dem Einfluss des heißen Metalls pyrolysieren/reagieren und dadurch den Zerfall der Gießform oder des Kerns nach dem Guss durch Porenbildung erleichtern. Das Dokument DE 1558155 A offenbart für wasserglasgebundene Kerne beispielsweise den Einsatz von Zucker, Steinkohlenstaub oder Perlpech, DD 82809 B1 offenbart den Einsatz von Stärkeprodukten, Kohlenstaub und Melasse als organische Zerfallsförderer und DD 141118 A1 offenbart unter anderem die Verwendung von Kohlenstaub, Kohlenhydraten, Stärke, Stärkederivaten und Zuckern als Zerfallsförderer. Allerdings führt die Verwendung von organischen Komponenten in Formstoffmischungen während des Abgusses regelmäßig zum Auftreten der unerwünschten Emissionen von CO₂ und anderen Pyrolyseprodukten. Als besonders nachteilig wird zudem empfunden, dass organische Zerfallsförderer bei hohen Abgusstemperaturen häufig ihre Wirksamkeit verlieren, da es bei hohen Temperaturen, wie sie beispielsweise beim Stahlguss auftreten, rasch zu einem vollständigen Ausbrand der organischen Zerfallsförderer kommt, wohingegen die Schmelz- und Sintervorgänge noch weiter stattfinden, wenn die organischen Zerfallsförderer bereits verbraucht sind. In diesem Fall werden die Zerfallseigenschaften durch organische Zerfallsförderer häufig nur unwesentlich verbessert. Darüber hinaus ist die Wiederverwertbarkeit von aus mit organischen Zerfallsförderern hergestellten Gießformen und Kernen häufig eingeschränkt, da der aus diesen Gießformen und Kernen herstellbare regenerierte Formgrundstoff mit Rückständen oder Zersetzungsprodukten der organischen Zerfallsförderer verunreinigt sein kann, die die Eigenschaften des regenerierten Formgrundstoffes negativ beeinflussen können und daher aufwendig entfernt werden müssen. Darüber hinaus hat sich in eigenen Versuchen gezeigt, dass der Einsatz von organischen Zerfallsförderern die Beständigkeit der hergestellten Gießformen und Kerne gegenüber Luftfeuchtigkeit und/oder wasserbasierten Schlichten reduzieren kann.

Bedingt durch die vorstehend dargelegten Nachteile organischer Zerfallsförderer besteht ein Bedarf an alternativen, vorzugsweise anorganischen Zerfallsförderern für anorganisch gebundene Gießformen und Kerne, die auch bei hohen Abgusstemperaturen die Zerfallseigenschaften von Gießformen und Kernen positiv beeinflussen können ohne die Nachteile der bekannten organischen Zerfallsförderer aufzuweisen. Solche anorganischen Zerfallsförderer sind im Stand der Technik beschrieben.

Das Dokument DE 1558155 offenbart, dass eine Verbesserung der Entkernbarkeit gerade von bei hohen Temperaturen gegossenen Gussstücken erzielt werden kann, wenn ein Teil des inerten Füllstoffes durch Calciumcarbonat ersetzt wird, wobei statt Calciumcarbonat auch Carbonate anderer Erdalkalien eingesetzt werden können. Die zerfallsfördernde Wirkung resultiert dabei jedoch aus der Zersetzung der Carbonate, wobei CO₂ freigesetzt wird. Dieser Umstand wird häufig als nachteilig empfunden. Zudem betrifft die Offenbarung der DE 1558155 den Einsatz in Kernen, die mit Hilfe von Wasserglas hergestellt werden, welches durch Zusatz eines pulverförmigen Härters gebunden wird, der neben Silizium bzw. einer Siliziumlegierung auch Bentonit enthält.

In DD 246488 A1 wird ein Formstoff mit günstigen Zerfallseigenschaften zur Herstellung von Formen und Kernen im Prozess der Gussstückherstellung, insbesondere für Formgusserzeugnisse aus Stahlguss offenbart, dadurch gekennzeichnet, dass eine oder mehrere feuerfeste Grundkomponenten und ein Binder, bestehend aus einem Gemisch von Natriumsilikatlösung (Modul 2,2...2,6; Dichte 1,46...1,55 g/cm³) und einer mit Alkaliphosphaten chemisch modifizierten Natriumsilikatlösung (Modul 2,6...3,5; Dichte 1,38...1 ,41 g/cm³), vorzugsweise im Verhältnis 1: 1 enthalten sind. DD 246488 betrifft dabei solche Formstoffe, die durch die Begasung mit CO₂ ausgehärtet werden.

DE 102013111626 A1 offenbart eine Formstoffmischung zur Herstellung von Formen oder Kernen umfassend zumindest einen feuerfesten Formgrundstoff, Wasserglas als Bindemittel, partikuläres amorphes Siliziumdioxid und eine oder mehrere pulverformige oxidische Bor-Verbindungen. Hierbei werden die oxidischen Bor-Verbindungen als Zerfallsförderer eingesetzt.

DE 1190610 und DE 1198495 offenbaren den Einsatz von Bentonit zur Herstellung von nach dem Abgießen leicht zerfallenden Formen und Kernen nach dem Wasserglas-Kohlensäureverfahren.

US 3203057 offenbart Formstoffmischungen bestehend aus einem feinen Feuerfestmaterial, einem flüssigen Bindemittel, welches im Wesentlichen aus einer Alkalimetall-Silikat Lösung besteht, sowie einem Zerfallsförderer der im Wesentlichen aus Al₂O₃ besteht. Hierbei muss die Alkalimetall-Silikat Lösung eine Alkalinität im Bereich von 18-30 % aufweisen.

DE 10 2005 041 863 A1 gibt borsilikatglashaltige Formstoffmischungen an.

Die Dissertation von R. Ramakrishnan (Technische Universität München, angenommen Januar 2016) beschäftigt sich mit 3-D-Drucken mit einem anorganischen Formstoffsystem.

DE 15 58 155 A lehrt ein Verfahren zur Herstellung von Kernen.

EP 2308614 A1 beschreibt einen Aerogelsand, welcher durch Zugabe von Schichtsilikat und Xerogel Grünfestigkeit aufweist.

X. Zhang et al. berichten in Mater. Horiz. 2014, 1, 232-236, dass konventionelle Aerogele, darunter organische Resorcin-Formaldehyd-Aerogele, allenfalls mit Schwierigkeiten regeneriert werden können und daher oft problematisch bei der Abfallentsorgung sind.

Eine primäre Aufgabe der vorliegenden Erfindung war es, ein Verfahren zur Herstellung von Gießformen und Kernen, insbesondere von wasserglasgebundenen Gießformen und Kernen, anzugeben, wobei die hergestellten Gießformen und Kerne insbesondere die folgenden Anforderungen erfüllen sollen:
- einfache Herstellbarkeit unter Verwendung von gebräuchlichen Apparaturen und Fertigungsroutinen;
- hohe Festigkeit nach der Herstellung und möglichst gleichbleibende Festigkeit auch nach längerer Lagerdauer;
- hohe Beständigkeit gegen Luftfeuchtigkeit und wasserhaltige Schlichten, so dass der Kontakt mit Luftfeuchtigkeit oder das Schlichten der Gießformen und Kerne mit einer wasserhaltigen Schlichte nur in geringen Festigkeitsverlusten resultiert;
- sehr gute Oberflächengüte der mit den Gießformen bzw. Kernen hergestellten Gussstücke, insbesondere beim Messing-, Eisen- oder Stahlguss;
- keine oder nur geringe Emission von CO₂ und/oder anderen unerwünschten Pyrolyseprodukten während des Metallgusses, insbesondere während des Messing-, Eisen- oder Stahlgusses;
- sehr gute Zerfallseigenschaften, d.h. eine geringe Restfestigkeit, nach dem Einsatz im Metallguss, insbesondere im Messing-, Eisen- oder Stahlguss, so dass die Gießformen und Kerne nach der Verwendung im Metallguss bereits durch eine geringe mechanische Belastung leicht und rückstandsfrei vom Gussstück getrennt werden können.

Darüber hinaus war es die Aufgabe der vorliegenden Erfindung das Verfahren so auszugestalten, dass mit dem Verfahren aus den hergestellten Gießformen und Kernen mit besonders geringem Aufwand ein regenerierter Formgrundstoff erhalten werden kann, dessen Eigenschaften dem Ausgangsformgrundstoff, d.h. einem Formgrundstoff der gleichen Art und des gleichen Ursprungs, welcher noch nicht in der Herstellung von Gießformen und Kernen eingesetzt wurde, besonders ähnlich sind.

Der so hergestellte regenerierte Formgrundstoff (erste Generation) soll demnach für die Herstellung von Gießformen und Kernen geeignet sein, insbesondere für die Herstellung von Gießformen und Kernen gemäß dem anzugebenden Verfahren. Der hergestellte regenerierte Formgrundstoff soll somit geeignet sein, Gießformen und Kerne herzustellen, die die vorstehend definierten Anforderungen erfüllen und die insbesondere wiederum, auch nach dem Einsatz im Messing-, Eisen- oder Stahlguss, gute Zerfallseigenschaften zeigen und leicht zu einem regenerierten Formgrundstoff (zweite Generation) umgesetzt werden können.

Es war dabei die Aufgabe, das Verfahren so auszugestalten, dass die Rezyklierbarkeit des im Verfahren einzusetzenden Formgrundstoffes besonders hoch ist, d.h. dass ein isoliert betrachteter Formgrundstoffpartikel im Laufe des als Kreislauf ausgeführten Verfahrens Bestandteil möglichst zahlreicher Gießformen oder Kerne wird.

Um den vorstehenden Anforderungen besonders gut entsprechen zu können, war es eine Aufgabe, das anzugebende Verfahren so zu konzipieren, dass der hergestellte regenerierte Formgrundstoff hinsichtlich seiner chemischen Zusammensetzung möglichst genau dem Ausgangsformgrundstoff entspricht, d.h. einem Formgrundstoff der gleichen Art und des gleichen Ursprungs, welcher noch nicht in der Fertigung von Gießformen und Kernen eingesetzt wurde. Dies bedeutet insbesondere, dass der Gehalt an Alkalimetallionen und der Gehalt an weiteren Zusätzen, insbesondere an gegebenenfalls in den Gießformen und Kernen vorhanden Zerfallsförderern, im regenerierten Formgrundstoff möglichst niedrig sein soll, damit die Konzentration dieser Bestandteile nicht im Zuge des anzugebenden Verfahrens erhöht wird.

Zudem war es eine weitere Aufgabe, das anzugebende Verfahren so auszulegen, dass es in der Praxis besonders effizient unter Verwendung eines Formgrundstoffkreislaufes ausgeführt werden kann.

Es war eine ergänzende Aufgabe der vorliegenden Erfindung zu erreichen, dass Schritte des anzugebenden Verfahrens zumindest teilweise unter Verwendung eines 3D-Druckers oder eines 3D-Druckverfahrens erfolgen können.

Darüber hinaus war es eine Aufgabe der vorliegenden Erfindung, (i) eine Mischung zur Kombination mit einer Lösung oder Dispersion umfassend Wasserglas, (ii) ein Mehrkomponenten-Bindemittelsystem und (iii) eine Formstoffmischung anzugeben, mit der Gießformen und Kerne hergestellt werden können, die die vorstehend definierten Anforderungen erfüllen.

Zudem war es eine Aufgabe der vorliegenden Erfindung, eine Formgrundstoffmischung anzugeben, mit der Gießformen und Kerne hergestellt werden können, die die vorstehend definierten Anforderungen erfüllen, und die einen regenerierten Formgrundstoff umfasst, der mit dem anzugebenden Verfahren (siehe oben) herstellbar ist.

Des Weiteren war es eine Aufgabe der vorliegenden Erfindung, eine Gießform bzw. einen Kern anzugeben, die die vorstehend definierten Anforderungen erfüllen.

Weitere (Teil-)Aufgaben der vorliegenden Erfindung ergeben sich aus den beigefügten Patentansprüchen und der vorliegenden Beschreibung.

Die vorstehend genannten Aufgaben werden durch Verfahren, Mischungen, Mehrkomponenten-Bindemittelsysteme, Formstoffmischungen, Formgrundstoffmischungen, Verwendungen, Gießformen und Kerne gelöst, wie sie in den beigefügten Ansprüchen definiert sind. Bevorzugte erfindungsgemäße Ausgestaltungen ergeben sich aus den Unteransprüchen.

Insbesondere werden die vorstehend genannten Aufgaben gelöst durch ein Verfahren zur Herstellung von Gießformen, Kernen und daraus regenerierten Formgrundstoffen, mit folgenden Schritten zur Herstellung einer Gießform bzw. eines Kerns:
- Bereitstellen oder Herstellen einer Formstoffmischung umfassend
   - einen Formgrundstoff, vorzugsweise einen partikulären Formgrundstoff,
   - eine Lösung oder Dispersion umfassend Wasserglas,
   - 0,1 bis 3 Gew.-% partikuläres, amorphes Siliziumdioxid, vorzugsweise pyrogenes, partikuläres, amorphes Siliziumdioxid,
      sowie zum Erleichtern des Zerfalls und/oder zum Erhöhen der Regenerierbarkeit der Gießform bzw. des Kerns
   - ein oder mehrere partikuläre Schichtsilikate in einer Gesamtmenge von 0,05 bis 0,4 Gew.-%, vorzugsweise von 0,1 bis 0,4 Gew.-%, besonders bevorzugt von 0,1 bis 0,3 Gew.-%, wobei der d₉₀-Wert der Gesamtmenge der Schichtsilikate kliner ist als 45 µm,
   wobei die Prozentangaben jeweils auf die Gesamtmasse der Formstoffmischung bezogen sind,
- Formen der Formstoffmischung,
- Aushärten der Formstoffmischung durch chemische Reaktion von Bestandteilen der Formstoffmischung miteinander, so dass die Gießform oder der Kern resultiert.

Der Formgrundstoff ist bevorzugt ein feuerfester Formgrundstoff. Als "feuerfest" werden im vorliegenden Text im Einklang mit dem üblichen fachmännischen Verständnis Massen, Werkstoffe und Mineralien bezeichnet, die zumindest kurzzeitig der Temperaturbelastung beim Abguss bzw. bei der Erstarrung einer Eisenschmelze, meist Gusseisen, widerstehen können. Als Formgrundstoff geeignet sind beispielsweise Quarz-, Zirkon- oder Chromerzsand, Olivin, Vermiculit, Bauxit, Schamotte sowie künstliche Formgrundstoffe.

Der Formgrundstoff macht vorzugsweise mehr als 80 Gew.-%, bevorzugt mehr als 90 Gew.- %, besonders bevorzugt mehr als 95 Gew.-%, der Gesamtmasse der Formstoffmischung aus. Der feuerfeste Formgrundstoff weist vorzugsweise einen rieselfähigen Zustand auf. Der erfindungsgemäß einzusetzende Formgrundstoff liegt demgemäß vorzugsweise und wie üblich (s.o.) - körnig bzw. partikulär vor.

Der mittlere Durchmesser der Formgrundstoffpartikel liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Vorzugsweise wird im Rahmen der vorliegenden Erfindung die Partikelgröße der Formgrundstoffpartikel bzw. deren mittlerer Durchmesser bestimmt durch Siebung gemäß VDG-Merkblatt (d.h. Merkblatt des "Vereins deutscher Gießereifachleute") P 27 vom Oktober 1999, Pkt. 4.3, welches die Verwendung von Prüfsieben nach DIN ISO 3310 vorgibt.

Die Lösung oder Dispersion umfassend Wasserglas kann durch Lösen von glasartigen Lithium-, Natrium- und Kaliumsilikaten in Wasser hergestellt werden. Es kann Wasserglas eingesetzt werden, welches ein, zwei oder mehr der genannten Alkaliionen enthält und/oder ein oder zudem auch ein oder mehr mehrwertige Kationen wie beispielsweise Aluminium enthält.

Die Lösung oder Dispersion umfassend Wasserglas weist bevorzugt einen Feststoffanteil im Bereich von 25 bis 65 Gew.-% auf, vorzugsweise von 30 bis 55 Gew.-%, besonders bevorzugt von 30 bis 50 Gew.-%, bezogen auf die Gesamtmasse der Lösung bzw. Dispersion. Hierbei wird bei der Berechnung des Feststoffanteils die gesamte in der Formstoffmischung enthaltene flüssige Phase, beispielsweise Wasser oder Alkohol, der Lösung bzw. Dispersion zugerechnet.

Je nach Anwendung und gewünschtem Festigkeitsniveau der herzustellenden Formen und Kerne umfasst die Formstoffmischung 0,5 Gew.-% bis 5 Gew.-%, bevorzugt 0,75 Gew.-% bis 4 Gew.-%, besonders bevorzugt 1 Gew.-% bis 3,5 Gew.-%, der Lösung oder Dispersion umfassend Wasserglas, bezogen auf die Gesamtmasse der Formstoffmischung.

Die Formstoffmischung umfasst erfindungsgemäß partikuläres, amorphes Siliziumdioxid ("SiO₂"); vorzugsweise pyrogenes, partikuläres, amorphes Siliziumdioxid, in üblicher Reinheit, d.h. mit üblichen Verunreinigungen und Nebenbestandteilen. Der Begriff "partikulär" bezeichnet dabei ein festes Pulver (einschließend Stäube) oder auch ein Granulat, das schüttfähig und somit auch siebfähig ist.

Der d₉₀-Wert des partikulären, amorphen Siliziumdioxids, vorzugsweise des pyrogenen, partikulären, amorphen Siliziumdioxids, ist vorzugsweise kleiner als 100 µm, bevorzugt kleiner als 45 µm, besonders bevorzugt kleiner als 25 µm. Dies bedeutet, dass 90 % des in der Formstoffmischung enthaltenen partikulären, amorphen Siliziumdioxids, vorzugsweise des pyrogenen, partikulären, amorphen Siliziumdioxids, vorzugsweise kleiner ist als 100 µm, bevorzugt kleiner ist als 45 µm, besonders bevorzugt kleiner ist als 25 µm. Der d₉₀-Wert wird durch Aufnahmen mit dem Rasterelektronenmikroskop (JSM-6510 der Firma Jeol) bestimmt.

Als partikuläres, amorphes Siliziumdioxid können sowohl synthetisch hergestellte als auch natürlich vorkommende Typen eingesetzt werden. Letztere sind z.B. aus DE 102007045649 bekannt, sind aber nicht bevorzugt, da sie häufig nicht unerhebliche kristalline Anteile enthalten und deshalb als karzinogen eingestuft sind. Synthetisch hergestelltes amorphes Siliziumdioxid wird durch eine bewusst durchgeführte chemische Reaktion hergestellt. Beispiele hierfür sind die Flammhydrolyse von Siliziumtetrachlorid und die Reduktion von Quarzsand mit z.B. Koks im Lichtbogenofen bei der Herstellung von Ferrosilizium und Silizium. Das nach diesen beiden Verfahren hergestellte amorphe SiO₂ ("Siliziumdioxid") wird auch als pyrogenes SiO₂ bezeichnet.

Bevorzugt umfasst die Formstoffmischung synthetisch hergestelltes partikuläres, amorphes SiO₂, besonders bevorzugt pyrogenes, partikuläres, amorphes SiO₂.

Im erfindungsgemäßen Verfahren (bzw. in der Formstoffmischung des erfindungsgemäßen Verfahrens) besonders bevorzugt einzusetzendes pyrogenes, partikuläres, amorphes Siliziumdioxid umfasst im Rahmen der vorliegenden Erfindung diejenigen Typen von partikulärem, amorphen Siliziumdioxid (oft auch bezeichnet als "pyrogene Kieselsäuren"), welche mit der CAS RN 69012-64-2 und der CAS RN 112945-52-5 bezeichnet werden. Diese im erfindungsgemäßen Verfahren besonders bevorzugt einzusetzenden Typen von pyrogenem, partikulärem, amorphem Siliziumdioxid können auf an sich bekannte Weise hergestellt werden, insbesondere durch Flammhydrolyse von Siliziumtetrachlorid, durch Reduktion von Quarzsand mit Kohlenstoff (z.B. Koks) im Lichtbogenofen (vorzugsweise bei der Herstellung von Ferrosilizium und Silizium) oder aus ZrSiO₄ bzw. bei der Herstellung von ZrO₂ aus ZrSiO₄.

Ganz besonders bevorzugt umfasst das erfindungsgemäß bevorzugt einzusetzende pyrogene, partikuläre, amorphe Siliziumdioxid dasjenige partikuläre, amorphe Siliziumdioxid, welches mit der CAS RN 69012-64-2 bezeichnet wird und vorzugsweise durch Reduktion von Quarzsand mit Kohlenstoff (z.B. Koks) im Lichtbogenofen (bei der Herstellung von Ferrosilizium und Silizium) hergestellt wird bzw. bei der Herstellung von Ferrosilizium und Silizium als Nebenprodukt anfällt und/oder welches aus ZrSiO₄ hergestellt wird bzw. bei der Herstellung von ZrO₂ aus ZrSiO₄ als Nebenprodukt anfällt. Dieses spezielle pyrogene, partikuläre, amorphe Siliziumdioxid wird auf dem Fachgebiet auch als "Microsilica" bezeichnet.

Die "CAS RN" steht jeweils für die CAS-Registrierungsnummer und CAS-Registernummer, engl. *CAS Registry Number, CAS = Chemical Abstracts Service.* Dabei handelt es sich um einen internationalen Bezeichnungsstandard für chemische Stoffe. Für jeden in der CAS-Datenbank registrierten chemischen Stoff (auch Biosequenzen, Legierungen, Polymere) existiert dabei eine eindeutige CAS-Nummer.

In einer bevorzugten Variante des erfindungsgemäßen Verfahrens umfasst die Formstoffmischung als partikuläres, amorphes Siliziumdioxid nur pyrogenes, partikuläres, amorphes Siliziumdioxid.

Schichtsilikate sind Silikate und als solche Salze der Ortho-Kieselsäure (Si(OH)₄). Diese Salze sind durch SiO₄-Tetraeder aufgebaute Verbindungen. Als Schichtsilikate bezeichnet man Silikate, deren Silikatanionen aus (Doppel-)Schichten eckenverknüpfter SiO₄-Tetraeder bestehen. Diese Schichten oder Doppelschichten sind untereinander nicht über weitere Si-O-Bindungen zu Gerüsten verknüpft. Bevorzugte Schichtsilikate sind Kaolinit, Metakaolin, Montmorillonit, Halloysit, Hectorit, Smektit, Moskovit, Pyrophyllit und synthetische Schichtsilikate, wobei synthetische Schichtsilikate solche Schichtsilikate sind, die nicht natürlich vorkommen, sondern durch eine gezielte chemische Reaktion künstlich erzeugt wurden.

Erfindungsgemäß ist der d₉₀-Wert der Gesamtmenge der Schichtsilikate kleiner als 45 µm. Dies bedeutet, dass 90 % der in der Formstoffmischung enthaltenen Schichtsilikat-Partikel kleiner sind als 45 µm. Der d₉₀-Wert wird durch Aufnahmen mit dem Rasterelektronenmikroskop (JSM-6510 der Firma Jeol) bestimmt.

In dem erfindungsgemäßen Verfahren umfasst die Formstoffmischung ein oder mehrere Schichtsilikate zum Erleichtern des Zerfalls und/oder zum Erhöhen der Regenerierbarkeit der Gießform bzw. des Kerns.

In dem erfindungsgemäßen Verfahren umfasst die Formstoffmischung vorzugsweise ein oder mehrere Schichtsilikate zum Erleichtern des Zerfalls und zum Erhöhen der Regenerierbarkeit der Gießform bzw. des Kerns.

Ein erleichterter Zerfall bedeutet, dass die aus der Formstoffmischung hergestellten Formen und Kerne nach dem Einsatz im Metallguss, d.h. nach dem Kontakt mit einer heißen Metallschmelze, beispielsweise einer Eisenschmelze, eine geringe Restfestigkeit aufweisen und bereits durch eine geringe mechanische Belastung schnell und rückstandsfrei vom Gussstück getrennt werden können. Eine erhöhte Regenerierbarkeit der Gießform bzw. des Kerns bedeutet, dass aus der aus einer verwendeten Gießform bzw. einem Kern durch Ablösen vom Gussstück erhaltenen Mischung ein Regenerat erhalten werden kann, welches erneut als Formgrundstoff in einer Formstoffmischung zur Herstellung von Gießformen bzw. Kernen eingesetzt werden kann, wobei die chemische Zusammensetzung und die Eigenschaften des Regenerates denen des Formgrundstoffes besonders ähnlich sind, der zur Herstellung der ursprünglichen Gießform bzw. des ursprünglichen Kerns verwendet wurde.

Durch die gleichzeitige Anwesenheit von partikulärem, amorphem Siliziumdioxid, vorzugsweise pyrogenem, partikulärem, amorphem Siliziumdioxid, sowie von einem oder mehreren partikulären Schichtsilikaten in der zur Herstellung verwendeten Formstoffmischung, wird der Zerfall von Gießformen bzw. Kernen erleichtert bzw. deren Regenerierbarkeit erhöht, im Vergleich mit Gießformen und Kernen, die aus Formstoffmischungen hergestellt wurden, die nicht sowohl partikuläres, amorphes Siliziumdioxid, vorzugsweise pyrogenes, partikuläres, amorphes Siliziumdioxid, als auch partikuläre Schichtsilikate enthalten. Bei der Herstellung der Formstoffmischung wird beispielsweise so vorgegangen, dass zunächst der feuerfeste Formgrundstoff, üblicherweise in einem Mischer, vorgelegt wird. Diesem werden anschließend unter Rühren die Lösung oder Dispersion umfassend Wasserglas, das partikuläre, amorphe Siliziumdioxid, vorzugsweise das pyrogene, partikuläre, amorphe Siliziumdioxid, die partikulären Schichtsilikate und gegebenenfalls weitere Bestandteile zugesetzt. Die Mischdauer wird bevorzugt so gewählt, dass eine innige Durchmischung der Bestandteile der Formstoffmischung erreicht wird

Das Formen der Formstoffmischung umfasst jede bewusste und zielgerichtete Formgebung der Formstoffmischung, d. h. jedes bewusste und zielgerichtete Überführen der Formstoffmischung in eine dreidimensionale Gestalt. Vorzugsweise erfolgt das Formen der Formstoffmischung durch das Einbringen der Formstoffmischung in eine (Hohl-)Form. Alternativ kann das Formen der Formstoffmischung auch mit anderen dem Fachmann bekannten Verfahren erfolgen. Beispielsweise kann das Formen der Formstoffmischung im Rahmen eines 3D-Druckverfahrens mittels eines 3D-Druckers erfolgen.

Das Aushärten einer Formstoffmischung umfasst jeden Vorgang, durch den die Festigkeit der geformten Formstoffmischung gegenüber der nicht ausgehärteten geformten Formstoffmischung erhöht wird. Das Aushärten einer Formstoffmischung setzt nicht voraus, dass die Aushärtung vollständig ist. Das Aushärten einer Formstoffmischung umfasst somit auch das nicht vollständige Aushärten der Formstoffmischung. Dies entspricht dem fachmännischen Verständnis des Begriffs "Aushärten", da aus Gründen der Reaktionskinetik nicht zu erwarten ist, dass sämtliche der reaktiven Bestandteile in der hergestellten oder bereitgestellten Formstoffmischung während des Aushärtungsvorganges reagieren. Der Fachmann kennt insoweit beispielsweise das Phänomen der Nachhärtung der Formstoffmischung.

Erfindungsgemäß erfolgt das Aushärten der Formstoffmischung durch chemische Reaktion von Bestandteilen der Formstoffmischung miteinander, sodass die Gießform oder der Kern resultiert. Ursächlich für das Aushärten einer Formstoffmischung, die eine Lösung oder Dispersion umfassend Wasserglas umfasst, ist im Wesentlichen die Kondensation des Wasserglases, d.h. die Verknüpfung der Silikateinheiten des Wasserglases miteinander.

Das Aushärten der Formstoffmischung erfolgt im Sinne der vorliegenden Erfindung dann durch chemische Reaktion von Bestandteilen der Formstoffmischung miteinander, wenn der geformten Formstoffmischung zum Unterstützen oder Bewirken der Härtung keine weiteren Substanzen von außen zugeführt werden müssen oder gar mittels geeigneter Apparaturen zugeführt werden, die an der Aushärtereaktion teilnehmen oder diese erst initiieren.

Beispiele für ein Aushärten der Formstoffmischung durch chemische Reaktion von Bestandteilen der Formstoffmischung miteinander sind dem Fachmann per se bekannte Verfahren, in denen das Aushärten durch Erhitzen der geformten Formstoffmischung unterstützt oder bewirkt wird sowie Verfahren in denen das Aushärten der Formstoffmischung durch die Verseifung eines Esters, der Teil der Formgrundstoffmischung ist, unterstützt oder bewirkt wird.

Ein Beispiel für ein nicht-erfindungsgemäßes Aushärten der Formstoffmischung ist ein Verfahren, in dem das Aushärten der Formstoffmischung in geeigneten Anlagen und/oder unter Einsatz geeigneter Apparaturen (wie Leitungen, Pumpen etc.) durch gezieltes Begasen der geformten Formstoffmischung mit einem Gas oder Gasgemisch unterstützt oder bewirkt wird, welches mehr als 1 Mol-% CO₂ enthält. In solchen als CO₂-Verfahren bekannten Verfahren zum Aushärten einer Formstoffmischung erfolgt die Aushärtung der Formstoffmischung nicht lediglich durch chemische Reaktion von Bestandteilen der Formstoffmischung miteinander, sondern insbesondere auch durch die Reaktion von Bestandteilen der Formstoffmischung mit einem von außen zugeführten Reaktanten, nämlich CO₂. Im Gegensatz zu den mit dem erfindungsgemäßen Verfahren hergestellten Gießformen und Kernen zeigen Gießformen und Kerne, die bei ansonsten gleicher Verfahrensgestaltung durch Aushärtung nach dem CO₂-Verfahren hergestellt wurden, nicht die beobachteten überraschenden Vorteile. Insbesondere zeigen entsprechende Gießformen und Kerne gegenüber erfindungsgemäßen Gießformen und Kernen schlechte Zerfallseigenschaften und eine deutlich herabgesetzte Regenerierbarkeit.

Es versteht sich, dass das erfindungsgemäße Verfahren bevorzugt unter Umgebungsbedingungen, das heißt in Gegenwart von Raumluft, durchgeführt wird. Diese Raumluft enthält zwar Kohlenstoffdioxid, dies entspricht im Sinne der vorliegenden Erfindung jedoch nicht einem Aushärten mit dem CO₂-Verfahren, welches das zielgerichtete Begasen der Formstoffmischung mit einem CO₂-reichen Gas voraussetzt, insbesondere in geeigneten Anlagen und/oder unter Einsatz geeigneter Apparaturen (wie Leitungen, Pumpen etc.). Umgekehrt kann es bei Anwendung des CO₂-Verfahrens auch in geringem Maße zu einer chemischen Verknüpfung der Wasserglasbestandteile kommen, an der keines der zugeführten CO₂-Moleküle beteiligt ist. Dies wird jedoch nicht als Aushärten der Formstoffmischung durch chemische Reaktion von Bestandteilen der Formstoffmischung miteinander aufgefasst.

Entsprechend bevorzugt sind erfindungsgemäße Verfahren (vorzugsweise wie vorstehend als bevorzugt bezeichnet),
wobei das Aushärten der Formstoffmischung zu mehr als 95 %, bevorzugt mehr als 99 % durch chemische Reaktion von Bestandteilen der Formstoffmischung miteinander erfolgt, bezogen auf die Zahl der Kondensationsreaktionen und/oder
wobei das Aushärten der Formstoffmischung nicht durch das CO₂-Verfahren erfolgt.

Bevorzugt ist ein oben angegebenes erfindungsgemäßes Verfahren (vorzugsweise wie vorstehend als bevorzugt bezeichnet), mit folgenden Schritten zur Herstellung einer Gießform bzw. eines Kerns:
- Bereitstellen oder Herstellen einer Formstoffmischung umfassend
   - einen Formgrundstoff, vorzugsweise einen partikulären Formgrundstoff, wobei vorzugsweise der mittlere Durchmesser der Formgrundstoffpartikel im Bereich von 100 µm bis 600 µm liegt, bevorzugt im Bereich von 120 µm bis 550 µm und besonders bevorzugt im Bereich von 150 µm bis 500 µm, wobei vorzugsweise die Partikelgröße bzw. der mittlere Durchmesser der Formgrundstoffpartikel durch Siebung gemäß VDG-Merkblatt P 27 vom Oktober 1999, Pkt. 4.3, bestimmt wird,
   - eine Lösung oder Dispersion umfassend Wasserglas, wobei das Wasserglas in der Formstoffmischung vorzugsweise einen molaren Modul SiO₂/M₂O im Bereich von 1,6 bis 4,0 besitzt, besonders bevorzugt im Bereich von 1,8 bis 2,5, wobei M₂O die Gesamtmenge an Lithium-, Natrium- und Kaliumoxid bezeichnet,
   - 0,1 bis 3 Gew.-% partikuläres, amorphes Siliziumdioxid, vorzugsweise pyrogenes, partikuläres, amorphes Siliziumdioxid,
      sowie zum Erleichtern des Zerfalls und/oder zum Erhöhen der Regenerierbarkeit der Gießform bzw. des Kerns
   - ein oder mehrere partikuläre Schichtsilikate in einer Gesamtmenge von 0,05 bis 0,4 Gew.-%, vorzugsweise von 0,1 bis 0,4 Gew.-%, besonders bevorzugt von 0,1 bis 0,3 Gew.-%, wobei der d₉₀-Wert der Gesamtmenge der Schichtsilikate kleiner ist als 45 µm,
   wobei die Prozentangaben jeweils auf die Gesamtmasse der Formstoffmischung bezogen sind,
- Formen der Formstoffmischung,
- Aushärten der Formstoffmischung durch chemische Reaktion von Bestandteilen der Formstoffmischung miteinander, so dass die Gießform oder der Kern resultiert.

Bevorzugt ist ein erfindungsgemäßes Verfahren (vorzugsweise wie vorstehend als bevorzugt bezeichnet), wobei die Formstoffmischung einen oder mehrere der folgenden Bestandteile umfasst:
- 0,3 bis 3 Gew.-%, vorzugsweise 0,57 bis 0,77 Gew.-% partikuläres, amorphes Siliziumdioxid, vorzugsweise pyrogenes, partikuläres, amorphes Siliziumdioxid,
- ein oder mehrere partikuläre Schichtsilikate in einer Gesamtmenge von 0,1 bis 0,4 Gew.-%, vorzugsweise 0,1 bis 0,3 Gew.-%, wobei der d₉₀-Wert der Gesamtmenge der Schichtsilikate kleiner ist als 45 µm,
- Graphit und/oder Molybdän(IV)-sulfid in einer Gesamtmenge von bis zu 1 Gew.-%, vorzugsweise von bis zu 0,2 Gew.-%, vorzugsweise in einer Gesamtmenge im Bereich von 0,01 bis 0,2 Gew.-%, vorzugsweise im Bereich von 0,03 bis 0,08 Gew.-%, wobei vorzugsweise nur Graphit eingesetzt ist,
- Ester in einer Gesamtmenge bis zu 0,4 Gew.-%, vorzugsweise in einer Gesamtmenge im Bereich von 0,01 Gew.-% bis 0,4 Gew.-%, wobei vorzugsweise zumindest einer der Ester ausgewählt ist aus der Gruppe bestehend aus den intramolekularen oder intermolekularen Umsetzungsprodukten eines Alkohols und einer Säure, wobei
   der Alkohol ausgewählt ist aus der Gruppe bestehend aus C1-C8 Mono-Alkoholen, C1-C8 Di-Alkoholen, vorzugsweise C2-C8 Di-Alkoholen, und C1-C8 Tri-Alkoholen, vorzugsweise C3-C8 Tri-Alkoholen, vorzugsweise ausgewählt ist aus der Gruppe bestehend aus Ethylenglykol, 1,2-Propandiol und Glyzerin
      und
   die Säure ausgewählt ist aus der Gruppe bestehend aus organischen C2-C8 Mono-Carbonsäuren, organischen C2-C8 Di-Carbonsäuren, organischen C2-C8 Tri-Carbonsäuren, vorzugsweise organischen C4-C8 Tri-Carbonsäuren, und anorganischen Säuren, vorzugsweise ausgewählt ist aus der Gruppe bestehend aus Ameisensäure, Essigsäure, Propionsäure, Milchsäure, Oxalsäure, Bernsteinsäure, Malonsäure, Phosphorsäure, Schwefelsäure, Borsäure und Kohlensäure
   wobei vorzugsweise zumindest einer der Ester Propylencarbonat oder y-Butyrolacton ist,
- bis zu 4 Gew.-% partikuläre gemischte Metalloxide, vorzugsweise umfassend zumindest ein Oxid des Aluminiums und zumindest ein Oxid des Zirkoniums
- eine oder mehrere oberflächenaktive Stoffe ausgewählt aus der Gruppe bestehend aus anionischen Tensiden, nichtionischen Tensiden, kationischen Tensiden und amphoteren Tensiden in einer Gesamtmenge von 0,001 bis 1 Gew.-%,
- eine oder mehrere oxidische Borverbindungen in einer Gesamtmenge von 0,002 bis 1 Gew.-%,
   wobei die eine oder zumindest eine der oxidischen Borverbindungen vorzugsweise ausgewählt ist aus der Gruppe bestehend aus Boraten, Borsäuren, Borsäureanhydride, Borosilikate, Borophosphate, und Borophosphosilikate, besonders bevorzugt ausgewählt ist aus der Gruppe bestehend aus Alkali- und Erdalkaliborat, wobei vorzugsweise die oxidische Borverbindung keine organischen Gruppen enthält.
- eine oder mehrere Phosphorverbindungen in einer Gesamtmenge von 0,05 bis 1 Gew.-%,
   wobei die eine oder zumindest eine der Phosphorverbindungen vorzugsweise ausgewählt ist aus der Gruppe bestehend aus organischen Phosphaten und anorganischen Phosphaten, vorzugsweise ausgewählt ist aus der Gruppe bestehend aus anorganischen Alkalimetallphosphaten,
- ein oder mehrere Kohlenhydrate in einer Gesamtmenge von 0,01 bis 10 Gew.-%,
   wobei das eine oder zumindest eines der Kohlenhydrate vorzugsweise ausgewählt ist aus der Gruppe bestehend aus Oligosacchariden und Polysachariden, vozugsweise ausgewählt ist aus der Gruppe bestehend aus Cellulose, Stärke und Dextrin.
- 0,02 bis 5 Gew.-% Bariumsulfat,
- ein oder mehrere Silane in einer Gesamtmenge von 0,1 bis 2 Gew.-%,
   wobei das eine oder zumindest eines der Silane vorzugsweise ausgewählt ist aus der Gruppe bestehend aus Aminosilanen, Epoxysilanen, Mercaptosilanen, Hydroxysilanen und Ureidosilanen
- eine oder mehrere Lithiumverbindungen in einer Gesamtmenge von 0,01 bis 0,2 Gew.-%,
   wobei die eine oder zumindesteine der Lithiumverbindungen vorzugsweise ausgewählt ist aus der Gruppe bestehend aus amorphen Lithiumsilikaten, Lithiumoxiden und Lithiumhydroxid
- partikuläres Aluminiumoxid, vorzugsweise in der alpha-Phase, und/oder partikuläres Aluminium/Silizium-Mischoxid ohne Schichtsilikat-Struktur in einer Gesamtmenge von 0,05 bis 4 Gew.-%
wobei die Prozentangaben jeweils auf die Gesamtmasse der Formstoffmischung bezogen sind.

Entsprechend bevorzugte erfindungsgemäße Verfahren haben sich in eigenen Versuchen als besonders vorteilhaft herausgestellt, weil mit ihnen Gießformen und Kerne hergestellt werden können, die besonders gute Zerfallseigenschaften besitzen und die besonders leicht so regeneriert werden können, dass der gewonnene regenerierte Formgrundstoff besonders leicht wiederum als Formgrundstoff eingesetzt werden kann, insbesondere wiederum in einem erfindungsgemäßen Verfahren.

Graphit und/oder Molybdän (IV)-Sulfid wirken als Schmierstoffe und verbessern dadurch die Verarbeitbarkeit der Formstoffmischung, insbesondere erleichtern sie in erfindungsgemäßen Verfahren den Schritt des Formens der Formstoffmischung. Überraschenderweise wirkt sich die Anwesenheit dieser Substanzen in der Formstoffmischung nicht negativ auf die Zerfallseigenschaften der hergestellten Formen und Kerne aus. Es hat sich gezeigt, dass Graphit gegenüber Molybdän (IV)-Sulfid bevorzugt ist, weil die Regenerierbarkeit der hergestellten Gießformen und Kerne in diesem Falle höher ist.

Ein weiterer Bestandteil, der bevorzugt in der Formstoffmischung enthalten ist, sind Ester. Ester sind die Umsetzungsprodukte eines Alkohols und einer Säure in einer Veresterungsreaktion, wobei die Veresterungsreaktion nicht nur intermolekular, sondern auch intramolekular erfolgen kann, d.h. einen Ringschluss in einem einzelnen Molekül verursacht, welches sowohl über eine Säurefunktion als auch über eine OH-Gruppe verfügt. Ein Beispiel für einen Ester, bei dem es sich um ein intramolekulares Umsetzungsprodukt eines Alkohols und einer Säure handelt ist γ-Butyrolacton. Ester sind als Bestandteil der Formstoffmischung bevorzugt, weil sie die Aushärtung der Formstoffmischung bewirken oder unterstützen können; entsprechende Aushärtungsverfahren sind dem Fachmann auch als sogenannte "Ester-Verfahren" bekannt.

Vorteilhafterweise hat sich in eigenen Versuchen gezeigt, dass die im erfindungsgemäßen Verfahren bereitzustellende oder herzustellende Formstoffmischung auch ein oder mehrere Bestandteile ausgewählt aus der Gruppe bestehend aus partikulären gemischten Metalloxiden, oberflächenaktiven Stoffen, oxidischen Borverbindungen, Phosphorverbindungen, Kohlenhydraten, Bariumsulfat, Silanen, Lithiumverbindungen und partikulärem Aluminiumoxid (bevorzugt wie vorstehend als bevorzugt angegeben) in den angegebenen Mengen enthalten kann, ohne die Vorteile des erfindungsgemäßen Verfahrens, insbesondere die verbesserten Zerfallseigenschaften und die erhöhte Regenerierbarkeit der mit dem erfindungsgemäßen Verfahren herstellbaren Gießformen und Kerne zu beeinträchtigen. Dies ist insbesondere deshalb vorteilhaft, weil sich mit den vorstehend aufgeführten Bestandteilen die Verarbeitungseigenschaften der Formstoffmischung und/oder die Eigenschaften der hergestellten Gießformen und Kerne (z. B. Festigkeit der Gießformen und Kerne oder die Oberflächengüte der herstellbaren Gießstücke) an die jeweiligen Erfordernisse anpassen lassen, ohne die Vorteile des erfindungsgemäßen Verfahrens zu verlieren.

Bariumsulfat kann der Formstoffmischung zugesetzt werden, um die Oberflächengüte des Gussstücks, insbesondere im Aluminiumguss, weiter zu verbessern. Das Bariumsulfat wird bevorzugt in einer Menge von 0,05 bis 3,0 Gew.-%, besonders bevorzugt 0,1 bis 2,0 Gew.-%, bezogen auf die Gesamtmasse der Formstoffmischung, zugegeben.

Silane werden der Formstoffmischung vorzugsweise zugesetzt, um die Benetzbarkeit des Formgrundstoffes oder die Fließfähigkeit der Formstoffmischung zu erhöhen.

Partikuläres Aluminiumoxid, vorzugsweise in der alpha-Phase, und/oder partikuläres Aluminium/Silizium-Mischoxid ohne Schichtsilikat-Struktur und/oder partikuläre gemischte Metalloxide können der Formstoffmischung zugesetzt werden, um die Oberflächengüte des Gussstücks, insbesondere im Stahl- und Eisenguss, weiter zu verbessern, so dass nach der Entfernung der Gießform vom Gussstück nur eine geringe oder sogar gar keine Nachbearbeitung der Oberfläche des Gussstücks erforderlich ist. Bevorzugt werden Konzentrationen zwischen 0,1 Gew.-% und 2,0 Gew.-%, besonders bevorzugt zwischen 0,1 Gew.-% und 1,5 Gew.-%, insbesondere bevorzugt zwischen 0,2 Gew.-% und 1,2 Gew.-%, bezogen auf die Gesamtmasse der Formstoffmischung.

Phosphorverbindungen können der Formstoffmischung zugesetzt werden, um die Herstellung besonders dünnwandiger Gießformen und Kerne zu ermöglichen, die trotzdem über eine hohe Festigkeit verfügen und eine hohe Beständigkeit beim Einsatz im Metallguss aufweisen. Aluminiumphosphate können darüber hinaus auch als Härter für das Wasserglasbindemittel eingesetzt werden.

Oberflächenaktive Substanzen, insbesondere Tenside, können der Formstoffmischung zugesetzt werden, um die Fließfähigkeit der Formstoffmischung zu verbessern. Geeignete Vertreter dieser Verbindungen sind z.B. in WO 2009/056320 (= US 2010/0326620 A1) beschrieben.

Oxidische Borverbindungen können der Formstoffmischung zugesetzt werden, um die Herstellung besonders feuchtigkeitsbeständiger Gießformen und Kerne zu ermöglichen.

Kohlenhydrate können der Formstoffmischung zugesetzt werden, um die Herstellung besonders fester Gießformen und Kerne mit einer hohen Lagerstabilität zu ermöglichen.

Lithiumverbindungen können der Formstoffmischung zugesetzt werden, um die Herstellung besonders lagerstabiler Gießformen und Kerne mit einer hohen Beständigkeit gegen Feuchtigkeit zu ermöglichen.

Die vorstehend definierten bevorzugten Gehalte an partikulärem amorphem Siliziumdioxid, vorzugsweise an pyrogenem, partikulärem amorphem Siliziumdioxid, und der Gesamtmenge an partikulärem Schichtsilikat haben sich in eigenen Versuchen als die Bereiche erwiesen, in denen sich die überraschenden Effekte der verbesserten Zerfallseigenschaften und der erhöhten Regenerierbarkeit der mit dem erfindungsgemäßen Verfahren hergestellten Gießformen und Kerne besonders deutlich zeigt. Diese Effekte sind besonders ausgeprägt, wenn die Formstoffmischung beide Bestandteile in den als bevorzugt angegebenen Mengen, bevorzugt in den als besonders bevorzugt angegebenen Mengen, umfasst.

Das bedeutet, dass ein erfindungsgemäßes Verfahren (vorzugsweise wie vorstehend als bevorzugt bezeichnet) sehr bevorzugt ist, wobei die Formstoffmischung
- 0,3 bis 3 Gew.-%, vorzugsweise 0,57 bis 0,77 Gew.-% partikuläres, amorphes Siliziumdioxid, vorzugsweise pyrogenes, partikuläres, amorphes Siliziumdioxid,
   und
- ein oder mehrere partikuläre Schichtsilikate in einer Gesamtmenge von 0,1 bis 0,4 Gew.-%, vorzugsweise 0,1 bis 0,3 Gew.-%, wobei der d₉₀-Wert der Gesamtmenge der Schichtsilikate kleiner ist als 45 µm,
umfasst.

Besonders bevorzugt ist unter Berücksichtigung der vorstehend genannten Vorteile ein erfindungsgemäßes Verfahren (vorzugsweise wie vorstehend als bevorzugt bezeichnet), umfassend das Bereitstellen oder Herstellen einer Formstoffmischung umfassend
- einen Formgrundstoff,
- eine Lösung oder Dispersion umfassend Wasserglas,
- ein oder mehrere partikuläre Schichtsilikate in einer Gesamtmenge von 0,1 bis 0,4 Gew.-%, bevorzugt 0,1 bis 0,3 Gew.-%, wobei der d₉₀-Wert der Gesamtmenge der Schichtsilikate kleiner ist als 45 µm,
- 0,3 bis 3 Gew.-%, vorzugsweise 0,57 bis 0,77 Gew.-%, partikuläres, amorphes Siliziumdioxid, vorzugsweise pyrogenes, partikuläres, amorphes Siliziumdioxid, und
- 0,01 bis 1 Gew.-% Graphit
wobei die Prozentangaben jeweils auf die Gesamtmasse der Formstoffmischung bezogen sind.

Besonders bevorzugt ist auch ein erfindungsgemäßes Verfahren (vorzugsweise wie vorstehend als bevorzugt bezeichnet), umfassend das Bereitstellen oder Herstellen einer Formstoffmischung umfassend
- einen Formgrundstoff,
- eine Lösung oder Dispersion umfassend Wasserglas,
- ein oder mehrere partikuläre Schichtsilikate in einer Gesamtmenge von 0,1 bis 0,4 Gew.-%, bevorzugt 0,1 bis 0,3 Gew.-%, wobei der d₉₀-Wert der Gesamtmenge der Schichtsilikate kleiner ist als 45 µm,
- 0,3 bis 3 Gew.-%, vorzugsweise 0,57 bis 0,77 Gew.-%, partikuläres, amorphes Siliziumdioxid, vorzugsweise pyrogenes, partikuläres, amorphes Siliziumdioxid,
- 0,01 bis 1 Gew.-% Graphit und
- einen oder mehrere Bestandteile ausgewählt aus der Gruppe bestehend aus partikulären gemischten Metalloxiden, oberflächenaktiven Stoffen, oxidischen Borverbindungen, Phosphorverbindungen, Kohlenhydraten, Bariumsulfat, Silanen, Lithiumverbindungen und partikulärem Aluminiumoxid (vorzugsweise wie vorstehend als bevorzugt bezeichnet),
wobei die Prozentangaben jeweils auf die Gesamtmasse der Formstoffmischung bezogen sind.

Bevorzugt ist zudem ein erfindungsgemäßes Verfahren (vorzugsweise wie vorstehend als bevorzugt bezeichnet), wobei das Wasserglas in der Formstoffmischung einen molaren Modul SiO₂/M₂O im Bereich von 1,6 bis 4,0 besitzt, vorzugsweise im Bereich von 1,8 bis 2,5, wobei M₂O die Gesamtmenge an Lithium-, Natrium- und Kaliumoxid bezeichnet.

Ein entsprechend bevorzugtes erfindungsgemäßes Verfahren ist vorteilhaft, weil sich mit diesem Verfahren besonders feste Gießformen und Kerne mit hervorragenden Zerfallseigenschaften herstellen lassen, die leicht regeneriert werden können.

Bei einem höheren als dem vorstehend angegebenen molaren Modul des Wasserglases ist die Ausgangsfestigkeit der aus der Formstoffmischung hergestellten Gießformen bzw. Kerne in einigen Fällen nicht ausreichend, um diese im Metallguss, insbesondere im Stahl-, Eisen- oder Messingguss, einzusetzen.

Bei einem niedrigeren molaren Modul führt die Hitzebeaufschlagung der aus der Formstoffmischung hergestellten Gießform bzw. des Kerns im Gießvorgang in manchen Fällen lediglich zu einer noch immer vergleichsweise hohen Restfestigkeit, sodass die Zerfallseigenschaften etwas weniger vorteilhaft sind als bei Gießformen und Kernen, die mit einem bevorzugten erfindungsgemäßen Verfahren hergestellt werden. Bei einer höheren Konzentration an M₂O, d.h. bei einem niedrigeren molaren Modul, zeigt sich darüber hinaus eine etwas weniger vorteilhafte Regenerierbarkeit der aus der Formstoffmischung hergestellten Gießformen und Kerne, insbesondere eine weniger vorteilhafte mehrmalige Regenerierbarkeit. Letzteres bedeutet, dass die Regenerierbarkeit einer Gießform bzw. eines Kerns, die aus einer Formstoffmischung hergestellt wurde, die bereits regenerierten Formgrundstoff umfasst, in diesem Fall verringert ist. Diese gegenüber dem bevorzugten erfindungsgemäßen Verfahren weniger günstige Eigenschaft steht dabei vermutlich mit der Anreicherung von Alkalioxiden im regenerierten Formgrundstoff im Zusammenhang.

Bevorzugt ist ein erfindungsgemäßes Verfahren (vorzugsweise wie vorstehend als bevorzugt bezeichnet), wobei der Formgrundstoff Quarzsand umfasst, vorzugsweise zumindest 50 Gew.-%, besonders bevorzugt zumindest 80 Gew.-% Quarzsand, bezogen auf die Gesamtmasse des Formgrundstoffes.

Entsprechend bevorzugte erfindungsgemäße Verfahren haben sich in der Praxis als besonders vorteilhaft erwiesen, weil sich bei Verwendung von Quarzsand als Formgrundstoff ein besonders guter Zerfall und damit eine gute Regenerierbarkeit der aus der Formstoffmischung herstellbaren Gießformen und Kerne zeigt, sodass dieser Formgrundstoff technisch bevorzugt ist. Der Grund hierfür könnte darin liegen, dass der aus Siliziumdioxid bestehende Quarzsand eine besonders hohe chemische Kompatibilität mit dem als Binder eingesetzten, ebenfalls siliziumbasierten Wasserglas sowie dem partikulären, amorphen Siliziumdioxid, vorzugsweise dem pyrogenen, partikulären, amorphen Siliziumdioxid, zeigt. Durch die Kombination dieser vornehmlich Silizium und Sauerstoff umfassenden Bestandteile reichern sich kaum Fremdbestandteil, d.h. beispielsweise keine Oxide anderer Elemente im regenerierten Formgrundstoff an.

Ein regenerierter Formgrundstoff, der neben dem eingesetzten Quarzsand auch noch geringe Mengen an gehärtetem Wasserglas und Rückständen des partikulären, amorphen Siliziumdioxids, vorzugsweise des pyrogenen, partikulären, amorphen Siliziumdioxids, umfasst, wird durch diese Bestandteile chemisch nicht oder nur unwesentlich verunreinigt, da die Bestandteile die gleiche bzw. eine zumindest äußerst ähnliche chemische Zusammensetzung aufweisen. Ein anderer Formgrundstoff als Quarzsand, wird im Gegensatz hierzu mit jedem Regenerationsvorgang mit insbesondere kleinen Mengen Siliziumdioxid verunreinigt, sodass sich die Eigenschaften und die chemische Zusammensetzung des Formgrundstoffes gegenüber einem nicht regenerierten Formgrundstoff verändern.

Bevorzugt ist ein erfindungsgemäßes Verfahren (vorzugsweise wie vorstehend als bevorzugt bezeichnet), wobei das Aushärten der Formstoffmischung
- durch Erhitzen der geformten Formstoffmischung unterstützt oder bewirkt wird, vorzugsweise durch Erhitzen in einem beheizten Formwerkzeug, vorzugsweise in einem beheizten Formwerkzeug mit einer Temperatur im Bereich von 100 bis 300 °C, und/oder durch Begasen mit heißer Luft, wobei vorzugsweise durch das Erhitzen und/oder das Begasen zumindest in Bereichen der geformten Formstoffmischung eine Temperatur im Bereich von 120 bis 180 °C eingestellt wird,
- durch die Verseifung eines Esters unterstützt oder bewirkt wird, wobei vorzugsweise zumindest einer der Ester ausgewählt ist aus der Gruppe bestehend aus den intramolekularen oder intermolekularen Umsetzungsprodukten eines Alkohols und einer Säure, wobei
   der Alkohol ausgewählt ist aus der Gruppe bestehend aus C1-C8 Mono-Alkoholen, C1-C8 Di-Alkoholen, vorzugsweise C2-C8 Di-Alkoholen, und C1-C8 Tri-Alkoholen, vorzugsweise C3-C8 Tri-Alkoholen, vorzugsweise ausgewählt ist aus der Gruppe bestehend aus Ethylenglykol, 1,2-Propandiol und Glyzerin
      und
   die Säure ausgewählt ist aus der Gruppe bestehend aus organischen C2-C8 Mono-Carbonsäuren, organischen C2-C8 Di-Carbonsäuren, organischen C2-C8 Tri-Carbonsäuren, vorzugsweise organischen C4-C8 Tri-Carbonsäuren, und anorganischen Säuren, vorzugsweise ausgewählt ist aus der Gruppe bestehend aus Ameisensäure, Essigsäure, Propionsäure, Milchsäure, Oxalsäure, Bernsteinsäure, Malonsäure, Phosphorsäure, Schwefelsäure, Borsäure und Kohlensäure
   wobei vorzugsweise zumindest einer der Ester Propylencarbonat oder y-Butyrolacton ist
   oder
- durch Begasen der geformten Formstoffmischung mit einem Gas oder Gasgemisch unterstützt oder bewirkt wird, welches weniger als 1 mol % CO₂ enthält.

Entsprechend bevorzugte erfindungsgemäße Verfahren sind besonders leicht, sicher sowie unter Verwendung etablierter Methoden durchführbar und ermöglichen darüber hinaus die Herstellung von Gießformen und Kernen mit ganz besonders günstigen Zerfallseigenschaften und einer ganz besonders vorteilhaften Regenerierbarkeit.

Das Aushärten der Formstoffmischung kann durch Erhitzen der geformten Formstoffmischung unterstützt oder bewirkt werden, da durch die erhöhte Temperatur, sowie ggf. durch einen heißen Luftstrom, Wasser aus der Formstoffmischung entfernt wird. Da Wasser eines der Produkte der Verknüpfungsreaktion des Wasserglases ist, wird das chemische Gleichgewicht der Verknüpfungsreaktion gemäß dem Prinzip von Le Chatelier auf die Seite des kondensierten Wasserglases, d.h. des ausgehärteten Wasserglases, verschoben, so dass die Aushärtung der Formstoffmischung unterstützt oder bewirkt wird.

Die Aushärtung der Formstoffmischung kann auch durch die Verseifung eines Esters unterstützt oder bewirkt werden. Durch die Verseifungsreaktion werden ebenfalls Nebenprodukte der Kondensationsreaktion des Wasserglases dem chemischen Gleichgewicht entzogen, welches daher gemäß dem Prinzip von Le Chatelier in Richtung des kondensierten Wasserglases, d.h. des ausgehärteten Wasserglases, verschoben wird.

Zudem kann das in der Formstoffmischung vorliegende bzw. das bei der Kondensation des Wasserglases entstehende Wasser auch durch das Begasen der geformten Formstoffmischung mit einem Gas oder Gasgemisch ausgetrieben werden, wodurch das Aushärten wie vorstehend beschrieben unterstützt oder bewirkt wird. Zu beachten ist in diesem Fall jedoch, dass das eingesetzte Gas oder Gasgemisch weniger als 1 Mol-% CO₂ enthält, d. h., dass das Aushärten nicht gemäß dem CO₂-Verfahren erfolgt, sondern auf die erfindungsgemäße Weise.

Vorteilhaft an den bevorzugten erfindungsgemäßen Verfahren ist, dass mit diesen das Aushärten der Formstoffmischung in besonders effektiver Weise unterstützt oder bewirkt werden kann, ohne dass die Zerfallseigenschaften und insbesondere die Regenerierbarkeit der mit dem Verfahren hergestellten Gießformen und Kerne reduziert wird. Besonders deutlich zeigen sich die Vorteile des erfindungsgemäßen Verfahrens im Vergleich zu Verfahren, in denen zur Aushärtung der Formstoffmischung das CO₂-Verfahren eingesetzt wird. Solche Gießformen und Kerne, die durch Aushärten einer Formstoffmischung mit dem CO₂-Verfahren hergestellt wurden, zeigen eine erheblich schlechtere Regenerierbarkeit, was vermutlich durch die Bildung von Alkalicarbonaten im Zuge der Aushärtung bedingt wird, die anschließend die Gewinnung eines vorteilhaften regenerierten Formgrundstoffes, d. h. eines regenerierten Formgrundstoffes, der wiederum bei der Herstellung von Gießformen und Kernen eingesetzt werden kann, unmöglich machen oder erheblich erschweren.

Bevorzugt ist mit anderen Worten auch ein erfindungsgemäßes Verfahren (vorzugsweise wie vorstehend als bevorzugt bezeichnet), wobei das Aushärten der Formstoffmischung
- nicht durch Begasen der geformten Formstoffmischung unter Einsatz von Begasungsapparaturen mit einem Gas oder Gasgemisch unterstützt oder bewirkt wird, welches mehr als 1 mol % CO₂ enthält und/oder
- nicht durch das CO₂-Verfahren unterstützt oder bewirkt wird.

Bevorzugt ist ein erfindungsgemäßes Verfahren (vorzugsweise wie vorstehend als bevorzugt bezeichnet), wobei die hergestellte Gießform bzw. der hergestellte Kern zumindest in Bereichen vorübergehend so auf eine Temperatur > 900 °C erhitzt wird, dass anschließend der Zerfall erleichtert ist, wobei vorzugsweise auf eine Temperatur < 1600 °C, besonders bevorzugt auf eine Temperatur im Bereich zwischen 900 °C und 1600 °C erhitzt wird.

Entsprechende erfindungsgemäße Verfahren sind bevorzugt, weil sich die verbesserten Zerfallseigenschaften der mit dem erfindungsgemäßen Verfahren herstellbaren Formen und Kerne besonders deutlich zeigen, wenn diese beim Gießvorgang zumindest in Bereichen vorübergehend auf eine Temperatur > 900 °C erhitzt werden, wobei die Temperatur vorzugsweise kleiner ist als 1600 °C. Das bedeutet, dass die hergestellte Gießform bzw. der Kern bevorzugt zumindest in Bereichen vorübergehend auf eine Temperatur im Bereich zwischen 900 °C und 1600 °C erhitzt werden.

Auch wenn sich die technischen Effekte der vorliegenden Erfindung auch außerhalb der angegebenen Temperaturbereiche zeigen, ist der angegebene Temperaturbereich bevorzugt, denn die Zerfallseigenschaften von Gießformen und Kernen werden, wenn diese im Verlauf des Gießvorgangs nicht zumindest in Bereichen vorübergehend auf eine Temperatur > 900 °C erhitzt wurden, in der Praxis manchmal ohnehin als weniger problematisch angesehen, da es bei niedrigeren Temperaturen in einem geringeren Maße zu Versinterungen bzw. zur Ausbildung von Schmelzphasen in den Gießformen bzw. Kernen kommt, die üblicherweise als (mit-)ursächlich für nachteilige Zerfallseigenschaften angesehen werden. Bei Temperaturen oberhalb von 1600 °C, die in der Gießereipraxis nur eine geringere Bedeutung haben, beobachtet man manchmal ebenfalls, dass der Zerfall der Gießformen und Kerne weniger problematisch ist, so dass die absolute Verbesserung der Zerfallseigenschaften geringer ausfällt. Demnach sind die Vorteile des erfindungsgemäßen Verfahrens im angegebenen Temperaturbereich besonders augenfällig.

Der Grund dafür, dass die Vorteile des erfindungsgemäßen Verfahrens hinsichtlich der Verbesserung des Zerfalls bei Temperaturen > 900 °C besonders ausgeprägt sind, ist vermutlich mit den thermisch induzierten Vorgängen in der Formstoffmischung zu erklären, die bei entsprechenden Temperaturen ablaufen.

Die mit dem erfindungsgemäßen Verfahren hergestellten Gießformen bzw. Kerne werden in der Regel durch das Kontaktieren mit einer Metallschmelze beim Abguss vorübergehend auf die vorstehend angegebenen Temperaturen (> 900°C; < 1600°C) erhitzt. Demgemäß bevorzugt ist ein erfindungsgemäßes Verfahren (vorzugsweise wie vorstehend als bevorzugt bezeichnet), wobei die hergestellte Gießform bzw. der hergestellte Kern zumindest in Bereichen durch Kontaktieren mit einer Metallschmelze beim Abguss vorübergehend so auf eine Temperatur > 900 °C erhitzt wird, dass anschließend der Zerfall erleichtert ist, wobei vorzugsweise auf eine Temperatur < 1600 °C, besonders bevorzugt auf eine Temperatur im Bereich zwischen 900 °C und 1600 °C erhitzt wird.

Das Erhitzen der Gießform bzw. des Kerns mit einer Metallschmelze setzt voraus, dass die Temperatur der Metallschmelze hinreichend hoch ist. Typische Metallschmelzen, die bei entsprechend hohen Temperaturen verarbeitet werden, sind Metallschmelzen, die aus Eisen, Eisenlegierungen, Stahl, Stahllegierungen, Messing oder Messinglegierungen bestehen.

Entsprechend bevorzugt ist ein erfindungsgemäßes Verfahren (vorzugsweise wie vorstehend als bevorzugt bezeichnet), wobei eine Metallschmelze eingesetzt wird, die aus Eisen, Eisenlegierungen, Stahl, Stahllegierungen, Messing oder Messinglegierungen besteht.

Entsprechend bevorzugte erfindungsgemäße Verfahren sind insbesondere deshalb vorteilhaft, weil der Einsatz der angegeben Metallschmelzen in der Praxis bislang häufig zu besonders schlechten Zerfallseigenschaften der eingesetzten Gießformen bzw. Kerne führt, insbesondere beim Einsatz von Formstoffmischungen umfassend Wasserglas, so dass das erfindungsgemäße Verfahren in diesen Fällen zu besonders großen absoluten Verbesserungen der Zerfallseigenschaften führt und in einigen Fällen die Verwendung von wasserglasgebundenen Gießformen und Kernen bei diesen Gießvorgängen überhaupt erst sinnvoll macht.

Bevorzugt ist ein erfindungsgemäßes Verfahren (vorzugsweise wie vorstehend als bevorzugt bezeichnet), wobei die ausgehärtete, geformte Formstoffmischung ganz oder teilweise mit einem Überzug einer Schlichtekomposition versehen wird, wobei der d₉₀-Wert der Gesamtmenge der in der Schlichtekomposition enthaltenen Feststoffpartikel vorzugsweise kleiner ist als 200 µm, wobei die Schlichtekomposition vorzugsweise eine Wasserschlichte oder eine Alkoholschlichte, besonders bevorzugt eine Wasserschlichte, ist.

Entsprechende erfindungsgemäße Verfahren sind bevorzugt, weil es der Einsatz von Gießformen und Kernen beim Gießen von Eisen üblicherweise erfordert, dass die Gießformen bzw. die Kerne ganz oder zumindest teilweise mit einem Überzug einer Schlichtekomposition versehen werden. Vorteilhafterweise lassen sich entsprechende geschlichtete Gießformen und Kerne mit dem erfindungsgemäßen Verfahren herstellen, ohne dass hierdurch die mit der Erfindung verknüpften Effekte und Vorteile in signifikanter Weise negativ beeinflusst werden.

Schlichten sind Suspensionen von feinkörnigen, feuerfesten bis hochfeuerfesten anorganischen Materialien in einer Trägerflüssigkeit, zum Beispiel Wasser oder Alkohol. Im ersten Fall spricht der Fachmann von einer Wasserschlichte, während er im zweiten Fall von einer Alkoholschlichte spricht. Die Schlichte wird durch ein geeignetes Auftragsverfahren, beispielsweise Sprühen, Tauchen, Fluten oder Streichen auf die Gießform oder den Kern aufgebracht und dort getrocknet, sodass ein Überzug mit der Schlichtekomposition entsteht.

Vorteilhaft ist, dass die mit dem erfindungsgemäßen Verfahren hergestellten, noch ungeschlichteten, Gießformen und Kerne besonders widerstandfähig gegenüber Wasser und Luftfeuchtigkeit sind, so dass zum Überziehen dieser Gießformen und Kerne auch Wasserschlichten eingesetzt werden können, ohne dass die vorteilhafte Grundfestigkeit und die guten Zerfallseigenschaften der Gießformen und Kerne verloren gehen. Der Einsatz von Wasserschlichten ist besonders vorteilhaft, weil diese umweltverträglicher sind als Alkoholschlichten und zu einer geringeren Arbeitsplatzbelastung mit Emissionen führen.

Die Notwendigkeit, Gießformen und Kerne für bestimmte Einsatzzwecke zu schlichten, wird mit Blick auf die Regenerierbarkeit der Formen und Kerne häufig als nachteilig empfunden, weil sich die Schlichte in ihrer stofflichen Zusammensetzung von der ausgehärteten Formstoffmischung unterscheidet, von dieser nach dem Zerfall der Gießform oder des Kerns jedoch nur schwer wieder getrennt werden kann, so dass der regenerierte Formgrundstoff durch Bestandteile der Schlichtekomposition verunreinigt werden kann. Dieser Effekt ist umso ausgeprägter, je öfter der Formgrundstoff regeneriert wird.

Es hat sich gezeigt, dass die Regenerierbarkeit in einem erfindungsgemäßen Verfahren hergestellter geschlichteter Gießformen und Kerne verbessert ist, wenn der d₉₀-Wert der Gesamtmenge der in der Schlichtekomposition enthaltenen Feststoffpartikel kleiner ist als 200 µm. Es hat sich gezeigt, dass insbesondere Formgrundstoff mit einer Partikelgröße > 200 µm, wie er regelmäßig in gemäß dem erfindungsgemäßen Verfahren hergestellte "geschlichtete" Gießformen und Kernen vorliegt, während der Regenerierung besonders einfach von den Bestandteilen der Schlichtekomposition getrennt werden kann, wobei vorteilhafterweise das gleiche Abtrennungsverfahren eingesetzt werden kann, das auch zur Abtrennung der weiteren Bestandteile der zur Herstellung eingesetzten Formstoffmischung, insbesondere dem eingesetzten partikulären Schichtsilikat, von dem zu regenerierenden Formgrundstoff zur Anwendung kommt. Bevorzugt erfolgt die Abtrennung der Bestandteile der Schlichtekomposition durch ein physikalisches Abtrennen, besonders bevorzugt durch physikalische Staubabtrennung.

Bevorzugt ist ein erfindungsgemäßes Verfahren (vorzugsweise wie vorstehend als bevorzugt bezeichnet), zur Herstellung eines regenerierten Formgrundstoffs aus der hergestellten Gießform bzw. dem hergestellten Kern nach dem Erhitzen, mit folgenden zusätzlichen Schritten:
- mechanisches Einwirken auf die hergestellte Gießform bzw. den hergestellten Kern, so dass die Gießform bzw. der Kern zerfällt,
- Herstellen des regenerierten Formgrundstoffs aus der zerfallenen Gießform bzw. dem zerfallenen Kern, vorzugsweise umfassend das Abtrennen und Entfernen von Staub, wobei das Abtrennen vorzugsweise ein physikalisches Abtrennen umfasst.

Ein entsprechendes bevorzugtes erfindungsgemäßes Verfahren ist vorteilhaft, weil mit diesem Verfahren aus einer hergestellten Gießform bzw. einem hergestellten Kern auf besonders einfachem Wege und in einem leicht zu automatisierenden Verfahren ein regenerierter Formgrundstoff hergestellt wird.

Ein regenerierter Formgrundstoff mit einer besonders vorteilhaften Qualität, d. h. mit einer besonders guten Eignung für den erneuten Einsatz in einem Verfahren zur Herstellung von Gießformen und Kernen, wird dann erhalten, wenn das Herstellen des regenerierten Formgrundstoffs das Abtrennen und Entfernen von Staub umfasst. Der Begriff "Staub" bezeichnet dabei sämtliche Partikel mit einem Durchmesser < 200 µm. Das bedeutet, dass insbesondere die Fraktionen des in der Formstoffmischung erfindungsgemäß eingesetzten partikulären Schichtsilikats abgetrennt werden, aber auch ggf. weitere im Staub enthaltene Bestandteile mit einem Partikeldurchmesser < 200 µm, wie zum Beispiel die Feststoffpartikel einer Schlichtekomposition.

Das Abtrennen und Entfernen des Staubes umfasst vorzugsweise ein physikalisches Abtrennen des Staubes. Dies kann beispielsweise durch ein Auswaschen des Staubes erfolgen. Besonders bevorzugt ist jedoch ein physikalisches Abtrennen durch Windsichtung, d. h. das Abtrennen des Staubes von den übrigen Bestandteilen in einem Gasstrom. Ein entsprechendes Verfahren ist bevorzugt, weil die Windsichtung besonders leicht in ein Formgrundstoff-Rezyklierungs-System integriert werden kann und zu einer besonders gründlichen Abtrennung des Staubes führt. Vorteilhaft ist auch, dass der erhaltene regenerierte Formgrundstoff durch dieses Verfahren nicht verunreinigt wird und beispielsweise keine Trocknungsschritte notwendig sind.

Bevorzugt ist ein erfindungsgemäßes Verfahren (vorzugsweise wie vorstehend als bevorzugt bezeichnet), wobei die bereitgestellte oder hergestellte Formstoffmischung einen Anteil an regeneriertem Formgrundstoff enthält, der gemäß dem vorstehend als bevorzugt genannten Verfahren hergestellt ist.

Ein entsprechend bevorzugtes erfindungsgemäßes Verfahren ist deshalb besonders vorteilhaft, weil sich die guten Festigkeiten und die hervorragenden Zerfallseigenschaften überraschenderweise auch für solche hergestellten Gießformen und Kerne zeigen, bei denen die gemäß dem erfindungsgemäßen Verfahren bereitgestellte oder hergestellte Formstoffmischung bereits einen Anteil an auf erfindungsgemäße Weise regeneriertem Formgrundstoff enthält. In anderen Verfahren, die aus dem Stand der Technik bekannt sind, wird der Einsatz von regeneriertem Formgrundstoff in manchen Fällen als nachteilig empfunden, und es müssen Einbußen bei der Festigkeit und den Zerfallseigenschaften der Gießformen und Kerne in Kauf genommen werden, wenn die ökologischen und ökonomischen Vorteile des Einsatzes von regeneriertem Formgrundstoff genutzt werden sollen.

Insbesondere hat das bevorzugte erfindungsgemäße Verfahren den Vorteil, dass auch die Regenerierbarkeit der hergestellten Gießformen und Kerne durch den Einsatz eines regenerierten Formgrundstoffes im Vergleich mit aus dem Stand der Technik bekannten Verfahren nicht bzw. nur geringfügig beeinträchtigt wird, sodass das erfindungsgemäße Verfahren besonders leicht so ausgestaltet werden kann, dass es einen Formgrundstoffkreislauf, d.h. ein Formgrundstoff-Rezyklierungs-System, umfasst. Dies bedeutet, dass die mit jeder Wiederverwertung fortschreitende qualitative Verschlechterung des Formgrundstoffes vorteilhafterweise besonders gering ist. Insbesondere kann vorteilhafterweise mit dem erfindungsgemäßen Verfahren ein regenerierter Formgrundstoff erhalten werden, dessen chemische Zusammensetzung der des entsprechenden unverbrauchten Formgrundstoffes besonders ähnlich ist.

Bevorzugt ist ein erfindungsgemäßes Verfahren (vorzugsweise wie vorstehend als bevorzugt bezeichnet),
wobei das Formen der Formstoffmischung und/oder das Aushärten der Formstoffmischung mittels eines 3D-Druckers erfolgt
und/oder
wobei das Formen der Formstoffmischung in einem 3D-Druckverfahren erfolgt und das Aushärten der Formstoffmischung während des 3D-Druckvorgangs und/oder nach dem 3D-Druckvorgang erfolgt.

Entsprechende bevorzugte erfindungsgemäße Verfahren sind vorteilhaft, weil die Herstellung von Gießformen und Kernen mittels 3D-Drucker und/oder in einem 3D-Druckverfahren die Fertigung von Gießformen und Kernen erlaubt, die eine komplexe Geometrie besitzen und dabei einen besonders gleichmäßigen strukturellen Aufbau und eine besonders homogene Verteilung der Bestandteile in der geformten Formstoffmischung aufweisen.

Mit einem entsprechenden bevorzugten erfindungsgemäßen Verfahren hergestellte Gießformen und Kerne zeigen vorteilhafterweise keine oder nur geringfügige Inhomogenitäten oder Konzentrationsgradienten in der geformten und/oder ausgehärteten Formstoffmischung, die zu einem unerwünschten Verklumpen oder zu lokal verminderten Zerfallseigenschaften führen könnten.

Die Zerfallseigenschaften entsprechender Gießformen und Kerne sind somit unabhängig von der Komplexität Ihrer Geometrie besonders gleichmäßig, gleichbleibend und reproduzierbar, wodurch bei der Herstellung von Gießformen und Kernen vorteilhafterweise eine hohe Prozesssicherheit erreicht wird.

Zudem ist die Regenerierbarkeit entsprechender Gießformen und Kerne besonders hoch, da diese, bedingt durch ihre homogene Zusammensetzung, bereits bei leichter mechanischer Belastung ein besonders feinkörniges Zerfallsprodukt ergeben, welches einen sehr geringen Anteil an agglomerierten Formgrundstoffpartikeln aufweist, die sich andernfalls beispielsweise infolge einer lokal besonders hohen Konzentration an Bindemittel oder einem lokal besonders niedrigen molaren Modul des Wasserglases bilden können.

Die Erfindung betrifft zudem eine Mischung zur Kombination mit einer Lösung oder Dispersion umfassend Wasserglas, zur Herstellung von Gießformen und/oder Kernen, umfassend
- 10 bis 98 Gew.-% partikuläres, amorphes Siliziumdioxid, vorzugsweise pyrogenes, partikuläres, amorphes Siliziumdioxid,
- 0 bis 15 Gew.-% Graphit,
- ein oder mehrere partikuläre gemischte Metalloxide, umfassend jeweils zumindest ein Oxid des Aluminiums und/oder zumindest ein Oxid des Zirkoniums, in einer Gesamtmenge von 0 bis 80 Gew.-%,
   sowie zum Erleichtern des Zerfalls und/oder zum Erhöhen der Regenerierbarkeit der Gießform bzw. des Kerns
- ein oder mehrere partikuläre Schichtsilikate in einer Gesamtmenge von 2 bis 80 Gew.-%, wobei der d₉₀-Wert der Gesamtmenge der Schichtsilikate kleiner ist als 45 µm,
wobei die Prozentangaben auf die Gesamtmasse der Mischung bezogen sind.

Eine entsprechende Mischung ist vorteilhaft, weil die gemäß dem erfindungsgemäßen Verfahren herzustellende oder bereitzustellende Formstoffmischung durch die Kombination der erfindungsgemäßen Mischung mit einer Lösung oder Dispersion umfassend Wasserglas sowie einen Formgrundstoff besonders einfach hergestellt werden kann. Überraschenderweise sind entsprechende erfindungsgemäße Mischungen auch besonders lagerstabil.

Bevorzugt ist eine erfindungsgemäße Mischung umfassend
- 25 bis 95 Gew.-%, bevorzugt 40 bis 95 Gew.-%, partikuläres, amorphes Siliziumdioxid, vorzugsweise pyrogenes, partikuläres, amorphes Siliziumdioxid,
- 1,5 bis 12,5 Gew.-%, bevorzugt 1,5 bis 6 Gew.-%, Graphit,
- ein oder mehrere partikuläre gemischte Metalloxide, umfassend jeweils zumindest ein Oxid des Aluminiums und/oder zumindest ein Oxid des Zirkoniums, in einer Gesamtmenge von 0 bis 65,5 Gew.-%, bevorzugt 0 bis 45 Gew.-%,
- ein oder mehrere partikuläre Schichtsilikate in einer Gesamtmenge von 5 bis 50 Gew.-%, bevorzugt 15 bis 50 Gew.-%, wobei der d₉₀-Wert der Gesamtmenge der Schichtsilikate kleiner ist als 45 µm,
wobei die Prozentangaben auf die Gesamtmasse der Mischung bezogen sind.

Solche bevorzugten erfindungsgemäßen Mischungen sind vorteilhaft, weil die Rieselfähigkeit der Mischung und deren Verarbeitbarkeit besonders hoch sind. Entsprechende erfindungsgemäße Mischungen können, insbesondere in kontinuierlich betriebenen Anlagen, besonders leicht durch Rohrleitungen transportiert werden.

Bevorzugt ist eine erfindungsgemäße Mischung (vorzugsweise wie vorstehend als bevorzugt bezeichnet) zusätzlich umfassend eine oder mehr Verbindungen ausgewählt aus der Gruppe bestehend aus oberflächenaktiven Stoffen, oxidischen Borverbindungen, Phosphorverbindungen, Kohlenhydraten, Silanen, Lithiumverbindungen, partikuläres Aluminiumoxid, partikuläre Aluminium/Silizium-Mischoxide ohne Schichtsilikat-Struktur und Bariumsulfat
wobei die oberflächenaktiven Stoffe vorzugsweise ausgewählt sind aus der Gruppe bestehend aus anionischen Tensiden, nichtionischen Tensiden, kationischen Tensiden, amphoteren Tensiden und deren Mischungen,
wobei die oxidischen Borverbindungen vorzugsweise ausgewählt sind aus der Gruppe bestehend aus Boraten, Borsäuren, Borsäureanhydride, Borosilikate, Borophosphate, Borophosphosilikate und deren Mischungen,
wobei die Phosphorverbindungen vorzugsweise ausgewählt sind aus der Gruppe bestehend aus organischen Phosphaten, anorganischen Phosphaten und deren Mischungen
wobei die Kohlenhydrate vorzugsweise ausgewählt sind aus der Gruppe bestehend aus Oligosacchariden, Polysachariden und deren Mischungen, vorzugsweise ausgewählt sind aus der Gruppe bestehend aus Cellulose, Stärke, Dextrin und deren Mischungen,
wobei die Silane vorzugsweise ausgewählt sind aus der Gruppe bestehend aus Aminosilanen, Epoxysilanen, Mercaptosilanen, Hydroxysilanen, Ureidosilanen und deren Mischungen
wobei die Lithiumverbindungen vorzugsweise ausgewählt sind aus der Gruppe bestehend aus amorphen Lithiumsilikaten, Lithiumoxiden, Lithiumhydroxid und deren Mischungen.

Entsprechende bevorzugte erfindungsgemäße Mischungen sind vorteilhaft, weil mit diesen besonders leicht bevorzugte erfindungsgemäße Formstoffmischungen für das erfindungsgemäße Verfahren hergestellt werden können und sich die Gegenwart der angeführten Verbindungen nicht negativ auf die Haltbarkeit und Verarbeitbarkeit der Mischung auswirkt. Es gelten insoweit die obigen Ausführungen zu bevorzugten Bestandteilen der erfindungsgemäß einzusetzenden Formstoffmischung und zu deren jeweiligen Vorteilen entsprechend, mutatis mutandis.

Vorteilhaft ist insoweit insbesondere, dass es bei Einsatz entsprechender Mischungen nicht nötig ist, die einzelnen Bestandteile einzeln zu lagern und zu verarbeiten, sondern dass diese der erfindungsgemäß herzustellenden Formstoffmischung in der Form einer einzelnen Komponente, nämlich als bevorzugte erfindungsgemäße Mischung, zugesetzt werden können.

Bevorzugt ist eine erfindungsgemäße Mischung (vorzugsweise wie vorstehend als bevorzugt bezeichnet), wobei die Mischung eine Feststoffmischung oder eine Dispersion aus zwei oder mehr Phasen ist.

Besonders bevorzugt ist dabei eine erfindungsgemäße Mischung (vorzugsweise wie vorstehend als bevorzugt bezeichnet), wobei die Mischung eine Dispersion aus zwei oder mehr Phasen ist.

In entsprechenden erfindungsgemäßen Mischungen ist zumindest eine Phase eine flüssige Phase. Dadurch lassen sich die Verarbeitungseigenschaften entsprechend bevorzugter erfindungsgemäßer Mischungen vorteilhaft beeinflussen, da diese Mischung mit Hilfe von Pumpensystemen besonders leicht durch Rohrleitungen geführt werden können und somit besonders für große und gegebenenfalls kontinuierlich arbeitende Anlagen vorteilhaft sind. Zudem sind entsprechende Mischungen hinsichtlich der Arbeitssicherheit und Arbeitsgesundheit besonders vorteilhaft, da entsprechende Mischungen nicht stauben und somit bei der Verarbeitung nicht zu einer Fein- und Feinststaub-Belastung am Arbeitsplatz führen, so dass das Risiko für Atemwegserkrankungen vorteilhafterweise minimiert werden kann.

Zudem lassen sich entsprechende bevorzugte erfindungsgemäße Mischungen besonders leicht, schnell und vollständig mit den weiteren Bestandteilen einer im erfindungsgemäßen Verfahren einzusetzenden Formstoffmischung vermischen, sodass eine besonders homogene Formstoffmischung erhalten wird, die frei von Konzentrationsgradienten ist. Besonders vorteilhaft ist, dass wasserlösliche Bestandteile der Formstoffmischung beim Einsatz entsprechender Mischungen bereits in gelöster Form zugesetzt werden können, wodurch lokale Konzentrationsgradienten in der Formstoffmischung, die durch ein langsames und/oder unvollständiges Lösen bedingt sein können, vermieden werden.

Die Erfindung betrifft des Weiteren ein Mehrkomponenten-Bindemittelsystem umfassend als räumlich separat vorliegende oder miteinander gemischte Komponenten
(A) eine erfindungsgemäße Mischung wie vorstehend definiert, vorzugsweise wie vorstehend als bevorzugt bezeichnet.
(B) eine Lösung oder Dispersion umfassend
Wasserglas, vorzugsweise ein Wasserglas mit einem molaren Modul SiO₂/M₂O im Bereich von 1,6 bis 4,0, vorzugsweise 1,8 bis 2,5, wobei M₂O die Gesamtmenge an Lithium-, Natrium- und Kaliumoxid bezeichnet.

Entsprechende erfindungsgemäße Mehrkomponenten-Bindemittelsysteme sind vorteilhaft, weil sich mit diesen besonders leicht die in einem erfindungsgemäßen Verfahren herzustellenden Formstoffmischungen, insbesondere auch bevorzugte Formstoffmischungen, herstellen lassen. Es gelten insoweit die obigen Ausführungen zu bevorzugten Bestandteilen der erfindungsgemäß einzusetzenden Formstoffmischung und zu deren jeweiligen Vorteilen entsprechend, mutatis mutandis. Besonders vorteilhaft sind entsprechende Mehrkomponenten-Bindemittelsysteme bei der Verwendung durch den Endverbraucher, d. h. bei den das erfindungsgemäße Verfahren anwendenden Gießereibetrieben, da die Handhabung und die Verarbeitung zu einer im erfindungsgemäßen Verfahren einzusetzenden Formstoffmischung besonders leicht sowie sicher erfolgen kann und dabei besonders unanfällig für Fehler, beispielsweise bei der Dosierung, ist. Bevorzugt umfasst das erfindungsgemäße Mehrkomponenten-Bindemittelsystem aus diesem Grund die Komponenten als miteinander gemischte Komponenten, wodurch die Anfälligkeit für Anwenderfehler beim Endverbraucher weiter minimiert wird.

Bevorzugt ist ein erfindungsgemäßes Mehrkomponenten-Bindemittelsystem (vorzugsweise wie vorstehend als bevorzugt bezeichnet), umfassend in der Komponente (B) und/oder einer weiteren Komponente (C) ein oder mehr Verbindungen ausgewählt aus der Gruppe bestehend aus oberflächenaktiven Stoffen, oxidischen Borverbindungen, Phosphorverbindungen, Kohlenhydraten, Silanen und Lithiumverbindungen,
wobei die oberflächenaktiven Stoffe vorzugsweise ausgewählt sind aus der Gruppe bestehend aus anionischen Tensiden, nichtionischen Tensiden, kationischen Tensiden, amphoteren Tensiden und deren Mischungen,
wobei die oxidischen Borverbindungen vorzugsweise ausgewählt sind aus der Gruppe bestehend aus Boraten, Borsäuren, Borsäureanhydride, Borosilikate, Borophosphate, Borophosphosilikate und deren Mischungen, besonders bevorzugt ausgewählt sind aus der Gruppe bestehend aus Alkali- und Erdalkaliborat, wobei vorzugsweise die oxidische Borverbindung keine organischen Gruppen enthält.
wobei die Phosphorverbindungen vorzugsweise ausgewählt sind aus der Gruppe bestehend aus organischen Phosphaten, anorganischen Phosphaten und deren Mischungen, vorzugsweise ausgewählt sind aus der Gruppe bestehend aus anorganischen Alkalimetallphosphaten,
wobei die Kohlenhydrate vorzugsweise ausgewählt sind aus der Gruppe bestehend aus Oligosacchariden, Polysachariden und deren Mischungen, vorzugsweise ausgewählt sind aus der Gruppe bestehend aus Cellulose, Stärke und Dextrin,
wobei die Silane vorzugsweise ausgewählt sind aus der Gruppe bestehend aus Aminosilanen, Epoxysilanen, Mercaptosilanen, Hydroxysilanen, Ureidosilanen und deren Mischungen
wobei die Lithiumverbindungen vorzugsweise ausgewählt sind aus der Gruppe bestehend aus amorphen Lithiumsilikaten, Lithiumoxiden, Lithiumhydroxid und deren Mischungen.

Entsprechend bevorzugte erfindungsgemäße Mehrkomponenten-Bindemittelsysteme sind vorteilhaft, weil mit ihnen besonders unkompliziert und sicher bevorzugte Formstoffmischungen bzw. Formstoffmischungen für bevorzugte erfindungsgemäße Verfahren erhalten werden können. Es gelten insoweit die obigen Ausführungen zu bevorzugten Bestandteilen der erfindungsgemäß einzusetzenden Formstoffmischung und zu deren jeweiligen Vorteilen entsprechend, mutatis mutandis.

Die Erfindung betrifft auch eine Formstoffmischung umfassend
- zumindest Komponenten (A) und (B) wie vorstehend definiert
   sowie
- als Komponente (D) einen feuerfesten Formgrundstoff.

Entsprechende erfindungsgemäße Formstoffmischungen sind bevorzugt, weil sie direkt und ohne weitere Verarbeitungsschritte in einem erfindungsgemäßen Verfahren eingesetzt und zu Gießformen und Kernen mit hervorragenden Zerfallseigenschaften und einer sehr guten Regenerierbarkeit verarbeitet werden können.

Bevorzugt ist eine erfindungsgemäße Formstoffmischung (vorzugsweise wie vorstehend als bevorzugt bezeichnet), umfassend
als feuerfesten Formgrundstoff oder als Bestandteil des feuerfesten Formgrundstoffs einen regenerierten Formgrundstoff, wobei dieser regenerierte Formgrundstoff vorzugsweise durch ein erfindungsgemäßes Verfahren herstellbar ist.

Eine entsprechende bevorzugte erfindungsgemäße Formstoffmischung ist aus Gründen der Nachhaltigkeit, der Ressourcenschonung und der Abfallvermeidung sowie unter ökonomischen Gesichtspunkten vorteilhaft.

Die besonders bevorzugte Ausgestaltung, wobei der regenerierte Formgrundstoff durch ein erfindungsgemäßes Verfahren herstellbar ist, ist besonders vorteilhaft, weil mit einem entsprechenden regenerierten Formgrundstoff die Vorteile des erfindungsgemäßen Verfahrens auch bei mehrmaliger Regeneration des Formgrundstoffes aus den hergestellten Gießformen und Kernen, d. h. auch bei Verwendung eines Formgrundstoff-Rezyklierung-Systems, erzielt werden können.

Bevorzugt ist eine erfindungsgemäße Formstoffmischung (vorzugsweise wie vorstehend als bevorzugt bezeichnet), wobei
- das Wasserglas einen molaren Modul SiO₂/M₂O im Bereich von 1,6 bis 4,0 besitzt, vorzugsweise im Bereich von 1,8 bis 2,5, wobei M₂O die Gesamtmenge an Lithium-, Natrium- und Kaliumoxid bezeichnet,
   und/oder
- der eingesetzte Formgrundstoff Quarzsand umfasst, vorzugsweise zumindest 50 Gew.-%, besonders bevorzugt zumindest 80 Gew.-% Quarzsand, bezogen auf die Gesamtmasse des Formgrundstoffes,

Entsprechende erfindungsgemäße Formstoffmischungen sind bevorzugt, weil sie direkt und ohne weitere Verarbeitungsschritte in bevorzugten erfindungsgemäßen Verfahren eingesetzt werden können. Es gelten insoweit die obigen Ausführungen zu bevorzugten Bestandteilen der erfindungsgemäß einzusetzenden Formstoffmischung und zu deren jeweiligen Vorteilen entsprechend, *mutatis mutandis.*

Die Erfindung betrifft zudem eine Formgrundstoffmischung umfassend
(X) 0 bis 99 Gew.-%, vorzugsweise 0 bis 90 Gew.-%, neues Formgrundstoffmaterial sowie
(Y) 1 bis 100 Gew.-%, vorzugsweise 10 bis 100 Gew.-%, regenerierten Formgrundstoff,

wobei die Prozentangaben jeweils auf die Gesamtmasse der Formgrundstoffmischung bezogen sind
   und
wobei der regenerierte Formgrundstoff (Y)
   - durch ein erfindungsgemäßes Verfahren herstellbar ist.

Eine entsprechende erfindungsgemäße Formgrundstoffmischung ist vorteilhaft, weil sie in erfindungsgemäßen Formstoffmischungen sowie erfindungsgemäßen Verfahren als Formgrundstoff eingesetzt werden kann und dabei zumindest 1 Gew.-%, vorzugsweise zumindest 50 Gew.-%, besonders bevorzugt zumindest 70 Gew.-%, an regeneriertem Formgrundstoff enthält, was aus den vorstehend beschriebenen ökologischen und ökonomischen Gesichtspunkten vorteilhaft ist.

Mit einer entsprechenden erfindungsgemäßen Formgrundstoffmischung lassen sich in einem erfindungsgemäßen Verfahren Gießformen und Kerne herstellen, die über sehr gute Zerfallseigenschaften und eine wiederum hohe Regenerierbarkeit verfügen. Hierbei wirkt sich der Umstand, dass die Gießformen und Kerne aus einem Formgrundstoff hergestellt werden, der erfindungsgemäß zumindest zu Teilen bereits aus regeneriertem Formgrundstoff besteht, vorteilhafterweise nicht oder nur geringfügig auf die Festigkeit, die Zerfallseigenschaften und die Regenerierbarkeit der hergestellten Gießformen und Kerne aus.

Die Erfindung betrifft darüber hinaus eine Gießform oder einen Kern,
- herstellbar durch ein erfindungsgemäßes Verfahren wie vorstehend definiert
   und/oder
- umfassend eine erfindungsgemäße Mischung wie vorstehend definiert
   und/oder
- umfassend ein ausgehärtetes erfindungsgemäßes Mehrkomponenten-Bindemittelsystem wie vorstehend definiert und/oder
- umfassend eine erfindungsgemäße Formstoffmischung wie vorstehend definiert und/oder
- umfassend eine erfindungsgemäße Formgrundstoffmischung wie vorstehend definiert.

Entsprechende erfindungsgemäße Gießformen oder Kerne weisen, wie vorstehend für das erfindungsgemäße Verfahren erläutert, eine gute Festigkeit und besonders vorteilhafte Zerfallseigenschaften sowie eine hohe Regenerierbarkeit auf. Es gelten insoweit die obigen Ausführungen zu bevorzugten Bestandteilen der erfindungsgemäß einzusetzenden Formstoffmischung und zu deren jeweiligen Vorteilen entsprechend, mutatis mutandis.

Die Erfindung betrifft zudem die Verwendung einer erfindungsgemäßen Mischung wie vorstehend definiert als Additiv zur Herstellung einer bzw. als Additiv für eine Wasserglas und partikuläres, amorphes Siliziumdioxid, vorzugsweise pyrogenes, partikuläres, amorphes Siliziumdioxid, umfassende Formstoffmischung, die durch chemische Reaktion von Bestandteilen der Formstoffmischung miteinander ausgehärtet wird,
bei der Herstellung einer Gießform oder eines Kerns,
zum Erleichtern des Zerfalls und/oder zum Erhöhen der Regenerierbarkeit der Gießform bzw. des Kerns. Es gelten insoweit die obigen Ausführungen zu bevorzugten erfindungsgemäßen Mischungen und zu deren jeweiligen Vorteilen entsprechend, *mutatis mutandis.* Durch die erfindungsgemäße Verwendung lassen sich, wie vorstehend für das erfindungsgemäße Verfahren erläutert, Gießformen und Kerne erhalten, die eine gute Festigkeit und besonders vorteilhafte Zerfallseigenschaften sowie eine hohe Regenerierbarkeit zeigen.

Bevorzugt ist eine erfindungsgemäße Verwendung (vorzugsweise wie vorstehend als bevorzugt bezeichnet), wobei
- das Wasserglas einen molaren Modul SiO₂/M₂O im Bereich von 1,6 bis 4,0 besitzt, vorzugsweise im Bereich von 1,8 bis 2,5, wobei M₂O die Gesamtmenge an Lithium-, Natrium- und Kaliumoxid bezeichnet,
   und/oder
- der bei der Herstellung der Gießform oder des Kerns eingesetzte Formgrundstoff Quarzsand umfasst, vorzugsweise zumindest 50 Gew.-%, besonders bevorzugt zumindest 80 Gew.-% Quarzsand, bezogen auf die Gesamtmasse des Formgrundstoffes,
   und/oder
- bei der Herstellung der Gießform oder des Kerns das Aushärten der Formstoffmischung
   - durch Erhitzen der geformten Formstoffmischung unterstützt oder bewirkt wird, vorzugsweise durch Erhitzen in einem beheizten Formwerkzeug und/oder durch Begasen mit heißer Luft, wobei vorzugsweise durch das Erhitzen zumindest in Bereichen der geformten Formstoffmischung eine Temperatur im Bereich von 120 bis 180 °C eingestellt wird,
   - durch die Verseifung eines Esters unterstützt oder bewirkt wird, wobei der Ester vorzugsweise ausgewählt ist aus der Gruppe bestehend aus Ethylenglycoldiacetat, Diacetin, Triacetin, Propylencarbonat und y-Butyrolacton,
      oder
   - durch Begasen der geformten Formstoffmischung mit einem Gas unterstützt oder bewirkt wird, welches weniger als 1 mol % CO₂ enthält.

Eine entsprechende bevorzugte erfindungsgemäße Verwendung ist vorteilhaft, weil sich die überraschende Verbesserung der Zerfallseigenschaften sowie die Verbesserung der Regenerierbarkeit der hergestellten Gießformen und Kerne bei entsprechender Verwendung, wie vorstehend für das erfindungsgemäße Verfahren erläutert, besonders deutlich zeigt. Zu den Vorteilen der hier als bevorzugt bezeichneten Ausgestaltungen der erfindungsgemäßen Verwendung gelten die obigen Ausführungen zu bevorzugten Verfahren und zu deren jeweiligen Vorteilen entsprechend, mutatis mutandis.

### Beispiele:

Im Folgenden wird die Erfindung anhand von Beispielen näher beschrieben.

### Beispiele V1 - V5 und E1 - E5:

### 1. Zusammensetzungen und Probenherstellung:

Untersucht wurden zunächst insgesamt 5 erfindungsgemäße Kerne, die mit einem erfindungsgemäßen Verfahren aus einer erfindungsgemäßen Formstoffmischung (E1 bis E5) hergestellt wurden, sowie fünf nicht erfindungsgemäße Vergleichsbeispiele (V1 bis V5). Die Zusammensetzungen der jeweiligen Formstoffmischungen, aus denen die entsprechenden Kerne hergestellt wurden, sind in Tabelle 1 zusammengefasst.

**Tabelle 1: Zusammensetzung der eingesetzten Formstoffmischungen. Sämtliche Werte sind in Gewichtsteilen angegeben.**

| Beispiel | Formgrundstoff^{a)} | Bindemittel^{b)} | Additiv^{c)} | Silikat^{d)} |
|---|---|---|---|---|
| V1 | 100 | 2,2 | - | - |
| V2 | 100 | 2,2 | 1,0 | - |
| V3 | 100 | 2,2 | - | 0,3 (Silikat-1) |
| V4 | 100 | 2,2 | 1,0 | 0,3 (Silikat-X) |
| V5 | 100 | 2,2 | 1,0 | 0,3 (Silikat-Y) |
| E1 | 100 | 2,2 | 1,0 | 0,3 (Silikat-2) |
| E2 | 100 | 2,2 | 1,0 | 0,3 (Silikat-3) |
| E3 | 100 | 2,2 | 1,0 | 0,3 (Silikat-4) |
| E4 | 100 | 2,2 | 1,0 | 0,3 (Silikat-5) |
| E5 | 100 | 2,2 | 1,0 | 0,3 (Silikat-1) |

| | | | | |
|---|---|---|---|---|
| a) Als Formgrundstoff wurde jeweils Quarzsand (coarse foundry silica sand 1K 0,20/0,315/0,40) der Fa. Grudzen Las eingesetzt. b) Als Bindemittel wurde jeweils ein Alkaliwasserglas mit einem molaren Modul SiO₂:M₂O (M₂O = Gesamtmenge von Na₂O und Li₂O) von 1,95 und einem Feststoffgehalt von 35 Gew.-% eingesetzt. c) Als Additiv wurde jeweils eine Mischung bestehend aus 95,625 Gewichtsteilen pyrogenem, partikulärem, amorphem Siliziumdioxid (CAS RN 69012-64-2) und 4,375 Gewichtsteilen Graphit eingesetzt. d) Als Silikate wurden in den Beispielen gemäß Tabelle 1 eingesetzt: Silikat-1: Ein kalziniertes partikuläres Schichtsilikat mit einem d₉₀-Wert < 45 µm (bezogen von der Werba-Chem GmbH unter dem Handelsnamen Werbalink^{®} MK-I); Silikat-2: Ein natürliches partikuläres Schichtsilikat (Halloysit) mit einem d₉₀-Wert < 45 µm (bezogen von der Osthoff Omega Group unter dem Handelsnamen Halloysite JM1 Mineralische Pigmente; Silikat-3: Ein synthetisches partikuläres Schichtsilikat mit einem d₉₀-Wert < 45 µm (bezogen von der BYK Additives & Instruments GmbH unter dem Handelsnamen Laponite^{®} RDS); Silikat-4: Ein thermisch aktiviertes partikuläres Schichtsilikat (Metakaolin) mit einem d₉₀-Wert < 45 µm (bezogen von der BASF SE unter dem Handelsnamen MetaMax^{®}); Silikat-5: Ein natürliches partikuläres Schichtsilikat (Montmorillonit) mit einem d₉₀-Wert < 45 µm (bezogen von der Alfa Aesar / Thermo Fischer (Kandel) GmbH unter dem Handelsnamen Montmorillonite K10). Silikat-X: Ein natürliches Inselsilikat (Andalusit) mit einem d₉₀-Wert < 45 µm (bezogen von der Eggerding B.V. Industrial Minerals unter dem Handelsnamen Andalusite 200 mesh); (Anmerkung: kein partikuläres Schichtsilikat) Silikat-Y: Ein natürliches Schichtsilikat (Montmorillonit) mit einem d₉₀-Wert > 45 µm (bezogen von der Damolin GmbH unter dem Handelsnamen SorbixUS Premium (0,3-0,7 mm)). (Anmerkung: d₉₀-Wert nicht kleiner als 45 µm) | | | | |

Aus den in Tabelle 1 angegebenen Formstoffmischungen wurden mit Hilfe eines beheizbaren Formwerkzeuges für die Herstellung von Biegestäben, wie es im VDG-Merkblatt M11 vom März 1974 offenbart ist, Prüfkörper durch Schießen hergestellt. Zum einen wurden Biegestäbe der Abmessungen 22,4 mm x 22,4 mm x 165 mm hergestellt, die die Grundlage für die nachfolgenden Untersuchungen zur Biegefestigkeit bildeten, sowie zum anderen zylindrische Prüfkörper mit einer Höhe von 50 mm und einem Durchmesser von 50 mm, die bei der Bestimmung der Zerfallseigenschaften eingesetzt wurden.

Hierfür wurden die in Tabelle 1 aufgeführten Komponenten jeweils in einem Laborflügelmischer (Firma Multiserw) gemischt. Dazu wurde zunächst der Quarzsand vorgelegt und das pulverförmige Additiv sowie gegebenenfalls das Silikat eingemischt. Danach wurde der Binder zugegeben. Die Mischung wurde anschließend für insgesamt zwei Minuten gerührt. Die Formstoffmischungen wurden jeweils mittels Druckluft (4 bar) in das Formwerkzeug, dessen Kemkastentemperatur 180 °C betrug, eingebracht. Die Schusszeit betrug 3 s, woran sich eine Härtezeit von 30 s anschloss (Verzögerungszeit 3 s). Zur Beschleunigung der Aushärtung der Mischungen wurde während der 30 s Härtezeit Heißluft (2 bar Begasungsdruck, 150°C Begasungs- und Begasungsschlauchtemperatur) durch das Formwerkzeug geleitet.

### 2. Bestimmung der Biegefestigkeit:

Zur Bestimmung der Biegefestigkeiten wurden die hergestellten Prüfriegel in ein Georg-Fischer-Festigkeitsprüfgerät, ausgerüstet mit einer 3-Punkt-Biegevorrichtung (Firma Multiserw), eingelegt und die Kraft gemessen, welche zum Bruch der Prüfriegel führte. Die Biegefestigkeiten wurden 1 Stunde nach der Entnahme aus dem Formwerkzeug gemessen (sogenannte Kaltfestigkeit). Die erhaltenen Messwerte sind in Tabelle 2 unter dem Eintrag "Biegefestigkeit" als Median von 3 Messungen angegeben.

### 3. Untersuchung der Zerfallseigenschaften:

Zur Untersuchung der Zerfallseigenschaften wurden die hergestellten zylindrischen Prüfkörper mit einer Höhe von 50 mm und einem Durchmesser von 50 mm in einem Muffelofen (Fa. Nabertherm) bei einer Temperatur von 900 °C für 10 Minuten thermisch belastet. Nach Entnahme der Prüfkörper aus dem Muffelofen und nach Abkühlen auf Raumtemperatur wurden die Prüfkörper auf einem Rüttelsieb (Sieb platziert auf einem Vibrationsrüttler, LPzE-3e, Fa. Multiserw) mit einer Maschenweite von 1,40 mm platziert und dann bei der größtmöglichen Amplitude (100% der apparativ maximal möglichen Einstellung) für 60 s gerüttelt. Es wurden jeweils die Masse sowohl des Rückstands auf dem Sieb als auch der zerkleinerten Menge in der Auffangwanne (zerfallener Anteil) mit Hilfe einer Waage bestimmt. Der Quotient des Gewichts des zerfallenen Anteils zur Gesamtmasse beider Anteile wird als Siebdurchgang bezeichnet und ist in Tabelle 2 unter dem Eintrag "Siebdurchgang" als Mittelwert von jeweils 4 Messungen angegeben. Verbesserte Zerfallseigenschaften zeigen sich insbesondere in hohen Werten für den Siebdurchgang.

### 4. Bestimmung der Qualität des regenerierten Formgrundstoffes:

Die Qualität eines regenerierten Formgrundstoffes und dessen Geeignetheit für den Einsatz bei der Herstellung von wasserglasgebundenen Gießformen und Kernen mit guten Zerfallseigenschaften kann insbesondere dann als gut bezeichnet werden, wenn die Konzentration von wasserlöslichen Salzen und Oxiden, insbesondere von wasserlöslichen Alkalisalzen und Alkalioxiden, im regenerierten Formgrundstoff besonders gering ist. Diese Eigenschaft kann mit Hilfe von Leitfähigkeitsmessungen untersucht werden.

4.1 Für jede Messung wurden zunächst zur Herstellung einer Ausgangslösung 100 mL Reinstwasser in ein Becherglas gegeben und mit 0,05 mL einer 1 M KCl-Lösung versetzt. Die Leitfähigkeit der erhaltenen Ausgangslösung wurde mit einem pH/Leitfähigkeits-Messgerät SevenMulti der Fa. Mettler Toledo bestimmt; sie entspricht einem Blindwert.

4.2 Zur Herstellung des regenerierten Formgrundstoffes wurden jeweils entsprechende Biegestäbe der Abmessungen 22,4 mm x 22,4 mm x 165 mm in einem Muffelofen (Fa. Nabertherm) bei einer Temperatur von 900 °C für 5 Minuten thermisch belastet. Nach Entnahme der Prüfkörper aus dem Muffelofen und nach Abkühlen auf Raumtemperatur wurden die Prüfkörper durch mechanische Einwirkung per Hand in einen rieselfähigen Zustand gebracht. 50 g des jeweils hergestellten regenerierten Formgrundstoffes wurden, ohne weitere Aufbereitung, in das Becherglas mit der Ausgangslösung (siehe oben 4.1) gegeben, welches anschließend mit einem Uhrglas abgedeckt wurde. Die erhaltene Suspension wurde auf einer Heizplatte auf 100 °C erhitzt, für 5 Minuten bei dieser Temperatur belassen und anschließend auf Raumtemperatur abgekühlt. Der Feststoffanteil der Suspension wurde durch Filtration abgetrennt und die Leitfähigkeit des erhaltenen Filtrats wie vorstehend unter 4.1 beschrieben bestimmt. In Tabelle 2 wird unter dem Eintrag "Leitfähigkeit" der Wert angegeben, der sich als Mittelwert von jeweils 4 Messungen für die Differenz zwischen der bestimmten Leitfähigkeit und dem jeweils zuvor bestimmten Blindwert ergibt.

4.3 Die Qualität eines regenerierten Formgrundstoffes kann auch durch die Bestimmung des Säurebedarfs beurteilt werden (vgl. hierzu das VDG-Merkblatt P26 vom Oktober 1999). Der Säurebedarf würde für ausgewählte Proben nach den Vorgaben des VDG-Merkblatts P26 vom Oktober 1999 bestimmt, wobei der dabei eingesetzte regenerierte Formgrundstoff wie unter 4.2 erläutert hergestellt wurde. In Tabelle 2 wird unter dem Eintrag "Säurebedarf" der Wert angegeben, der sich als Mittelwert von jeweils 4 Messungen ergibt.

4.4 Messwerte und Schlussfolgerungen:

**Tabelle 2: Messwerte**

| Beispiel | Biegefestigkeit / (N/cm²) | Siebdurchgang /(%) | Leitfähigkeit / (µS/cm) | Säurebedarf /(mg HCl/100 g) |
|---|---|---|---|---|
| V1 | 300 | 8 | 2730 | - |
| V2 | 470 | 52 | 3340 | 213 |
| V3 | 340 | 25 | 1870 | - |
| V4 | 460 | 76 | 2830 | 176 |
| V5 | 440 | 73 | 2100 | - |
| E1 | 520 | 95 | 1130 | 75 |
| E2 | 450 | 100 | 1370 | - |
| E3 | 390 | 100 | 790 | - |
| E4 | 400 | 99 | 1070 | - |
| E5 | 450 | 99 | 1420 | - |

4.4.1 Aus Tabelle 2 ist zu erkennen, dass mit dem erfindungsgemäßen Verfahren Gießformen und Kerne mit guten Biegefestigkeiten erhalten werden können.

4.4.2 Tabelle 2 zeigt deutlich, dass für sämtliche der mit dem erfindungsgemäßen Verfahren hergestellten Beispiele hervorragende Siebdurchgänge (als Maß für die Zerfallseigenschaften) von 95 % bis 100 % gemessen wurden, die sämtlich signifikant über den Siebduchgängen von 8 % bis 76 % liegen, die für die Vergleichsbeispiele ermittelt wurden. Hierbei zeigt sich insbesondere, dass weder der ausschließliche Einsatz eines partikulären Schichtsilikats (Beispiel V3, Abwesenheit von (pyrogenem) amorphem, partikulärem Siliziumdioxid) noch von (pyrogenem) partikulärem, amorphen Siliziumdioxid (Beispiel V2, Abwesenheit von partikulärem Schichtsilikat) zu einer solch ausgeprägten Erhöhung des Siebdurchganges führt wie die erfindungsgemäßen Kombinationen (Beispiele E1 bis E5). Es liegt in den erfindungsgemäßen Beispielen eine synergistische Wirkung vor, die dadurch besonders deutlich wird, dass auch der kombinierte Siebdurchgang der Beispiele V2 und V3 lediglich bei 77 % und damit signifikant unterhalb des niedrigsten Wertes liegt, der für die Beispiele E1 bis E5 bestimmt wurde.

Darüber hinaus zeigt der Vergleich der Beispiele E1 bis E5 mit dem Beispiel V4 deutlich, dass sich eine vorteilhafte technische Wirkung nur für partikuläre Schichtsilikate ergibt und dass beispielsweise der Einsatz eines Inselsilikats wie Andalusit (Silikat X) zu einem erheblich schlechteren Siebdurchgang führt.

Zudem zeigt der spezifische Vergleich des Beispiels E4 mit dem Beispiel V5, dass sich die technische Wirkung nur für partikuläre Schichtsilikate ergibt, die einen erfindungsgemäßen d90-Wert aufweisen, wohingegen grobkörnigere Ausführungen des chemisch gleichen Schichtsilikats (Silikat Y in Beispiel V5) in einem deutlich schlechteren Siebdurchgang resultieren.

Des Weiteren ist deutlich zu erkennen, dass sich der technische Effekt des verbesserten Siebdurchganges für sämtliche der untersuchten partikulären Schichtsilikate (Beispiele E1 bis E5), ungeachtet von bestehenden chemischen Unterschieden zwischen den eingesetzten partikulären Schichtsilikaten, zeigt.

4.4.3 Die Güte der erhaltenen regenerierten Formgrundstoffe kann zudem mit Hilfe der Leitfähigkeitswerte bewertet werden, wobei niedrige Leitfähigkeiten vorteilhaft sind.

Tabelle 2 zeigt deutlich, dass für sämtliche der mit dem erfindungsgemäßen Verfahren hergestellten Beispiele niedrige Leitfähigkeiten von 790 bis 1420 µS/cm gemessen wurden, die sämtlich signifikant unter den hohen Leitfähigkeiten von 1870 bis 3340 µS/cm liegen, die für die Vergleichsbeispiele ermittelt wurden.

Hierbei zeigt sich, dass weder der ausschließliche Einsatz eines partikulären Schichtsilikats (Beispiel V3, Abwesenheit von (pyrogenem) amorphem, partikulärem Siliziumdioxid) noch von (pyrogenem) partikulärem, amorphen Siliziumdioxid (Beispiel V2, Abwesenheit von partikulärem Schichtsilikat) zu einer solch ausgeprägten Verringerung der Leitfähigkeit führt wie die erfindungsgemäße Kombination (Beispiele E1 bis E5). Insbesondere resultiert der ausschließliche Einsatz von (pyrogenem) partikulärem, amorphem Siliziumdioxid (Beispiel V2) gegenüber dem Beispiel V1 (kein amorphes Siliziumdioxid; kein Silikat) sogar in einem Anstieg der Leitfähigkeit, wodurch die synergistische Wirkung der erfindungsgemäßen Kombination (Beispiele E1 - E5) besonders deutlich wird.

Zudem zeigt der Vergleich der Beispiele E1 bis E5 mit den Beispielen V4 und V5 deutlich, dass sich auch diese vorteilhafte technische Wirkung nur für partikuläre Schichtsilikate, insbesondere partikuläre Schichtsilikate, die einen erfindungsgemäßen d90-Wert aufweisen, ergibt, wohingegen der Einsatz eines Inselsilikats (V4; Silikat-X) genau wie der Einsatz einer grobkörnigeren Ausführung eines Schichtsilikates (V5, Silikat-Y) zu einem ungünstig hohen Leitfähigkeitswert führt. Des Weiteren ist deutlich zu erkennen, dass sich der technische Effekt des verbesserten Siebdurchganges für sämtliche der untersuchten partikulären Schichtsilikate (E1 bis E5), ungeachtet von bestehenden chemischen Unterschieden zwischen den eingesetzten Verbindungen, zeigt.

4.4.4 Die Betrachtung der in Tabelle 2 zusammengestellten Messwerte für den Säurebedarf verdeutlicht, dass der Säurebedarf mit den vorstehend unter 4.4.3 diskutierten Leitfähigkeiten direkt korreliert werden kann und dass der Säurebedarf umso kleiner ist, je kleiner auch die Leitfähigkeit ist.

4.4.5 Über die in Tabelle 2 zusammengestellten Messwerte hinaus, hat sich in eigenen Untersuchungen gezeigt, dass eine physikalische Abtrennung (Siebung) des Staubanteils < 125 µm der regenerierten Formgrundstoffe im Falle erfindungsgemäßer Formstoffmischungen (Beispiele E2 und E3) zu einer weiteren Abnahme der Leitfähigkeit um 10 % bis über 20 % führt. Bei einer nicht erfindungsgemäßen Mischung (Beispiel V2) ergab sich hingegen nach der Abtrennung nur eine Abnahme der Leitfähigkeit um ca. 5%.

### 5. Weitere Untersuchungen:

Untersucht wurden darüber hinaus Kerne, die unter Verwendung von erfindungsgemäßen Formstoffmischungen bzw. Vergleichsformstoffmischungen hergestellt wurden. Die Bestandteile der Formstoffmischungen werden in Tabelle 3 zunächst Abkürzungen zugeordnet. Gemäß Tabelle 4 werden die untersuchten Kerne nach ihren Bestandteilen in Gruppen eingeteilt und qualitativ hinsichtlich ihrer Festigkeit, ihrer Zerfallseigenschaften und ihrer Regenerierbarkeit bewertet.

**Tabelle 3: Bestandteile der im Verfahren eingesetzten Formstoffmischungen.**

| Abkürzung | Bestandteil |
|---|---|
| A | Formg ru ndstoff |
| B | Lösung oder Dispersion umfassend Wasserglas |
| C | 0,1 bis 3 Gew.-% (pyrogenes) partikuläres, amorphes Siliziumdioxid |
| D | 0,05 bis 1,5 Gew.-% Inselsilikat |
| E | 0,05 bis 1,5 Gew.-% Schichtsilikate, d₉₀-Wert > 45 µm |
| F | 0,05 bis 1,5 Gew.-% partikuläre Schichtsilikate, d₉₀-Wert < 45 µm |

**Tabelle 4: Qualitative Bewertung der aus den eingesetzten Formstoffmischungen hergestellten Kerne hinsichtlich ihrer Festigkeit, ihrer Zerfallseigenschaften und ihrer Regenerierbarkeit. Hierbei bedeuten die Symbole (- -) = sehr schlecht, (-) = eher schlecht, (+) = gut und (+ +) = sehr gut.**

| Nr. | Bestandteile der Formstoffmischung | Festigkeit | Zerfall | Regenerierbarkeit |
|---|---|---|---|---|
| 1 | A+B | -- | -- | -- |
| 2 | A+B+C | + + | - | - |
| 3 | A+B+F | -- | -- | + |
| 4 | A+B+C+D | + + | + | -- |
| 5 | A+B+C+E | + | + | - |
| 6 | A+B+C+F | + | + + | + + |

Die qualitative Bewertung in Tabelle 4 belegt, dass sich sehr gute Zerfallseigenschaften und eine sehr gute Regenerierbarkeit nur für erfindungsgemäße Formstoffmischungen bzw. Kerne (Nr. F) zeigen und dass für diese gleichzeitig eine gute Festigkeit beobachtet wird.

## Patentansprüche

1. Verfahren zur Herstellung von Gießformen, Kernen und daraus regenerierten Formgrundstoffen, mit folgenden Schritten zur Herstellung einer Gießform bzw. eines Kerns:
- Bereitstellen oder Herstellen einer Formstoffmischung umfassend
- einen Formgrundstoff
- eine Lösung oder Dispersion umfassend Wasserglas
- 0,1 bis 3 Gew.-% partikuläres, amorphes Siliziumdioxid sowie zum Erleichtern des Zerfalls und/oder zum Erhöhen der Regenerierbarkeit der Gießform bzw. des Kerns
- ein oder mehrere partikuläre Schichtsilikate in einer Gesamtmenge von 0,05 bis 0,4 Gew.-%, wobei der d₉₀-Wert der Gesamtmenge der Schichtsilikate kleiner ist als 45 µm, d.h., dass 90% der in der Formstoffmischung enthaltenen Schichtsilikatpartikel kleiner sind als 45 µm, wobei der d₉₀-Wert durch Aufnahmen mit dem Rasterelektronenmikroskop bestimmt wird,
wobei
die Prozentangaben jeweils auf die Gesamtmasse der Formstoffmischung bezogen sind,
- Formen der Formstoffmischung,
- Aushärten der Formstoffmischung durch chemische Reaktion von Bestandteilen der Formstoffmischung miteinander, so dass die Gießform oder der Kern resultiert.

2. Verfahren nach einem der vorangehenden Ansprüche, wobei das Wasserglas in der Formstoffmischung einen molaren Modul SiO₂/M₂O im Bereich von 1,6 bis 4,0 besitzt, vorzugsweise im Bereich von 1,8 bis 2,5, wobei M₂O die Gesamtmenge an Lithium-, Natrium- und Kaliumoxid bezeichnet.

3. Verfahren nach einem der vorangehenden Ansprüche, wobei der mittlere Durchmesser der Formgrundstoffpartikel im Bereich von 100 µm bis 600 µm liegt.

4. Verfahren nach einem der vorangehenden Ansprüche, wobei die Formstoffmischung pyrogenes, partikuläres, amorphes Siliziumdioxid umfasst und/oder das partikuläre, amorphe Siliziumdioxid ein pyrogenes, partikuläres, amorphes Siliziumdioxid ist.

5. Verfahren nach einem der vorangehenden Ansprüche, wobei die ein oder mehreren partikulären Schichtsilikate in der Formstoffmischung in einer Gesamtmenge von 0,1 bis 0,4 Gew.-%, vorzugsweise von 0,1 bis 0,3 Gew.-%, enthalten sind.

6. Verfahren nach einem der vorangehenden Ansprüche, umfassend das Bereitstellen oder Herstellen einer Formstoffmischung umfassend
- den Formgrundstoff,
- die Lösung oder Dispersion umfassend Wasserglas,
- die ein oder mehreren partikulären Schichtsilikate in einer Gesamtmenge von 0,1 bis 0,4 Gew.-%, bevorzugt 0,1 bis 0,3 Gew.-%,
- 0,3 bis 3 Gew.-%, vorzugsweise 0,57 bis 0,77 Gew.-%, des partikulären, amorphen Siliziumdioxids, vorzugsweise pyrogenes, partikuläres, amorphes Siliziumdioxid, und
- 0,01 bis 1 Gew.-% Graphit
wobei die Prozentangaben jeweils auf die Gesamtmasse der Formstoffmischung bezogen sind.

7. Verfahren nach einem der vorangehenden Ansprüche,
wobei der Formgrundstoff Quarzsand umfasst, vorzugsweise zumindest 50 Gew.-%, besonders bevorzugt zumindest 80 Gew.-% Quarzsand, bezogen auf die Gesamtmasse des Formgrundstoffes
und/oder
wobei das Aushärten der Formstoffmischung
- durch Erhitzen der geformten Formstoffmischung unterstützt oder bewirkt wird, vorzugsweise durch Erhitzen in einem beheizten Formwerkzeug, vorzugsweise in einem beheizten Formwerkzeug mit einer Temperatur im Bereich von 100 bis 300 °C, und/oder durch Begasen mit heißer Luft, wobei vorzugsweise durch das Erhitzen und/oder das Begasen zumindest in Bereichen der geformten Formstoffmischung eine Temperatur im Bereich von 120 bis 180 °C eingestellt wird,
- durch die Verseifung eines Esters unterstützt oder bewirkt wird, wobei vorzugsweise zumindest einer der Ester ausgewählt ist aus der Gruppe bestehend aus den intramolekularen oder intermolekularen Umsetzungsprodukten eines Alkohols und einer Säure, wobei
der Alkohol ausgewählt ist aus der Gruppe bestehend aus C1-C8 Mono-Alkoholen, C1-C8 Di-Alkoholen, vorzugsweise C2-C8 Di-Alkoholen, und C1-C8 Tri-Alkoholen, vorzugsweise C3-C8 Tri-Alkoholen, vorzugsweise ausgewählt ist aus der Gruppe bestehend aus Ethylenglykol, 1,2-Propandiol und Glyzerin und
die Säure ausgewählt ist aus der Gruppe bestehend aus organischen C2-C8 Mono-Carbonsäuren, organischen C2-C8 Di-Carbonsäuren, organischen C2-C8 Tri-Carbonsäuren, vorzugsweise organischen C4-C8 Tri-Carbonsäuren, und anorganischen Säuren, vorzugsweise ausgewählt ist aus der Gruppe bestehend aus Ameisensäure, Essigsäure, Propionsäure, Milchsäure, Oxalsäure, Bernsteinsäure, Malonsäure, Phosphorsäure, Schwefelsäure, Borsäure und Kohlensäure
wobei vorzugsweise zumindest einer der Ester Propylencarbonat oder y-Butyrolacton ist
oder
- durch Begasen der geformten Formstoffmischung mit einem Gas oder Gasgemisch unterstützt oder bewirkt wird, welches weniger als 1 mol % CO₂ enthält.

8. Verfahren nach einem der vorangehenden Ansprüche, wobei die hergestellte Gießform bzw. der hergestellte Kern zumindest in Bereichen vorübergehend so auf eine Temperatur > 900 °C erhitzt wird, dass anschließend der Zerfall erleichtert ist, wobei vorzugsweise auf eine Temperatur < 1600 °C, besonders bevorzugt auf eine Temperatur im Bereich zwischen 900 °C und 1600 °C erhitzt wird
und/oder
wobei die hergestellte Gießform bzw. der hergestellte Kern zumindest in Bereichen durch Kontaktieren mit einer Metallschmelze beim Abguss vorübergehend so auf eine Temperatur > 900 °C erhitzt wird, dass anschließend der Zerfall erleichtert ist, wobei vorzugsweise auf eine Temperatur < 1600 °C, besonders bevorzugt auf eine Temperatur im Bereich zwischen 900 °C und 1600 °C erhitzt wird, wobei vorzugsweise eine Metallschmelze eingesetzt wird, die aus Eisen, Eisenlegierungen, Stahl, Stahllegierungen, Messing oder Messinglegierungen besteht.

9. Verfahren nach Anspruch 8, zur Herstellung eines regenerierten Formgrundstoffs aus der hergestellten Gießform bzw. dem hergestellten Kern nach dem Erhitzen, mit folgenden zusätzlichen Schritten:
- mechanisches Einwirken auf die hergestellte Gießform bzw. den hergestellten Kern, so dass die Gießform bzw. der Kern zerfällt,
- Herstellen des regenerierten Formgrundstoffs aus der zerfallenen Gießform bzw. dem zerfallenen Kern, vorzugsweise umfassend das Abtrennen und Entfernen von Staub, wobei das Abtrennen vorzugsweise ein physikalisches Abtrennen umfasst.

10. Verfahren nach einem der vorangehenden Ansprüche, wobei die bereitgestellte oder hergestellte Formstoffmischung einen Anteil an regeneriertem Formgrundstoff enthält, der gemäß Anspruch 9 hergestellt ist
und/oder
wobei das Formen der Formstoffmischung und/oder das Aushärten der Formstoffmischung mittels eines 3D-Druckers erfolgt
und/oder
wobei das Formen der Formstoffmischung in einem 3D-Druckverfahren erfolgt und das Aushärten der Formstoffmischung während des 3D-Druckvorgangs und/oder nach dem 3D-Druckvorgang erfolgt.

11. Mischung zur Kombination mit einer Lösung oder Dispersion umfassend Wasserglas, zur Herstellung von Gießformen und/oder Kernen, umfassend
- 10 bis 98 Gew.-% partikuläres, amorphes Siliziumdioxid, vorzugsweise pyrogenes, partikuläres, amorphes Siliziumdioxid,
- 0 bis 15 Gew.-% Graphit,
- ein oder mehrere partikuläre gemischte Metalloxide, umfassend jeweils zumindest ein Oxid des Aluminiums und/oder zumindest ein Oxid des Zirkoniums, in einer Gesamtmenge von 0 bis 80 Gew.-%,
sowie zum Erleichtern des Zerfalls und/oder zum Erhöhen der Regenerierbarkeit der Gießform bzw. des Kerns
- ein oder mehrere partikuläre Schichtsilikate in einer Gesamtmenge von 2 bis 80 Gew.-%, wobei der d₉₀-Wert der Gesamtmenge der Schichtsilikate kleiner ist als 45 µm, d.h., dass 90% der Schichtsilikatpartikel kleiner sind als 45 µm, wobei der d₉₀-Wert durch Aufnahmen mit dem Rasterelektronenmikroskop bestimmt wird,
wobei die Prozentangaben auf die Gesamtmasse der Mischung bezogen sind,
wobei die Mischung bevorzugt eine Feststoffmischung oder eine Dispersion aus zwei oder mehr Phasen ist.

12. Mischung nach Anspruch 11, umfassend
- 25 bis 95 Gew.-%, bevorzugt 40 bis 95 Gew.-%, partikuläres, amorphes Siliziumdioxid, vorzugsweise pyrogenes, partikuläres, amorphes Siliziumdioxid,
- 1,5 bis 12,5 Gew.-%, bevorzugt 1,5 bis 6 Gew.-%, Graphit,
- ein oder mehrere partikuläre gemischte Metalloxide, umfassend jeweils zumindest ein Oxid des Aluminiums und/oder zumindest ein Oxid des Zirkoniums, in einer Gesamtmenge von 0 bis 65,5 Gew.-%, bevorzugt 0 bis 45 Gew.-%,
- ein oder mehrere partikuläre Schichtsilikate in einer Gesamtmenge von 5 bis 50 Gew.-%, bevorzugt 15 bis 50 Gew.-%, wobei der d₉₀-Wert der Gesamtmenge der Schichtsilikate kleiner ist als 45 µm, wie in Anspruch 11 definiert,
wobei die Prozentangaben auf die Gesamtmasse der Mischung bezogen sind,
wobei die Mischung bevorzugt eine Feststoffmischung oder eine Dispersion aus zwei oder mehr Phasen ist.

13. Mehrkomponenten-Bindemittelsystem umfassend als räumlich separat vorliegende Komponenten
(A) Mischung nach Anspruch 11 oder 12,
(B) eine Lösung oder Dispersion umfassend Wasserglas, vorzugsweise ein Wasserglas mit einem molaren Modul SiO₂/M₂O im Bereich von 1,6 bis 4,0, vorzugsweise 1,8 bis 2,5, wobei M₂O die Gesamtmenge an Lithium-, Natrium- und Kaliumoxid bezeichnet.

14. Formstoffmischung umfassend
- zumindest Komponente (A), eine Mischung nach Anspruch 12 wie in Anspruch 13 definiert und Komponente (B) wie in Anspruch 13 definiert
sowie
- als Komponente (D) einen feuerfesten Formgrundstoff,
vorzugsweise umfassend als feuerfesten Formgrundstoff oder als Bestandteil des feuerfesten Formgrundstoffs einen regenerierten Formgrundstoff, wobei dieser regenerierte Formgrundstoff besonders bevorzugt durch ein Verfahren nach Anspruch 9 herstellbar ist.

15. Verwendung einer Mischung nach Anspruch 11 oder 12 als Additiv zur Herstellung einer Wasserglas und partikuläres, amorphes Siliziumdioxid, vorzugsweise pyrogenes, partikuläres, amorphes Siliziumdioxid, umfassenden Formstoffmischung, die durch chemische Reaktion von Bestandteilen der Formstoffmischung miteinander ausgehärtet wird,
bei der Herstellung einer Gießform oder eines Kerns,
zum Erleichtern des Zerfalls und/oder zum Erhöhen der Regenerierbarkeit der Gießform bzw. des Kerns.

## Claims

1. A process for producing casting molds, cores and mold base materials regenerated therefrom, comprising the following steps for production of a casting mold or a core:
- providing or producing a molding material mixture comprising
- a mold base material
- a solution or dispersion comprising waterglass
- 0.1% to 3% by weight of particulate amorphous silicon dioxide
and, to facilitate the breakdown and/or to increase the regeneratability of the casting mold or the core,
- one or more particulate sheet silicates in a total amount of 0.05% to 0.4% by weight, where the d₉₀ of the total amount of the sheet silicates is less than 45 µm, i.e. that 90% of the particulate sheet silicates contained in the molding material mixture are smaller than 45 µm, where the d₉₀ is determined by means of scanning electron microscope,
where the percentages are each based on the total mass of the molding material mixture,
- shaping the molding material mixture,
- curing the molding material mixture by chemical reaction of constituents of the molding material mixture with one another, so as to result in the casting mold or the core.

2. The process as claimed in any of the preceding claims, wherein the waterglass in the molding material mixture has a modular SiO₂/M₂O modulus in the range from 1.6 to 4.0, preferably in the range from 1.8 to 2.5, where M₂O denotes the total amount of lithium oxide, sodium oxide and potassium oxide.

3. The process as claimed in any of the preceding claims, wherein the average diameter of the mold base material particles is in the range from 100 µm to 600 µm.

4. The process as claimed in any of the preceding claims, wherein the molding material mixture comprises fumed particulate amorphous silicon dioxide and/or the particulate amorphous silicon dioxide is a fumed particulate amorphous silicon dioxide.

5. The process as claimed in claim 1, wherein the one or more particulate sheet silicates are present in the molding material mixture in a total amount of 0.1% to 0.4% by weight, preferably of 0.1% to 0.3% by weight.

6. The process as claimed in any of the preceding claims, comprising the providing or producing of a molding material mixture comprising
- the mold base material,
- the solution or dispersion comprising waterglass,
- the one or more particulate sheet silicates in a total amount of 0.1% to 0.4% by weight, preferably 0.1% to 0.3% by weight,
- 0.3% to 3% by weight, preferably 0.57% to 0.77% by weight, of particulate amorphous silicon dioxide, preferably fumed particulate amorphous silicon dioxide, and
- 0.01% to 1% by weight of graphite,
where the percentages are each based on the total mass of the molding material mixture.

7. The process as claimed in any of the preceding claims,
wherein the mold base material comprises quartz sand, preferably at least 50% by weight, more preferably at least 80% by weight, of quartz sand, based on the total mass of the mold base material,
and/or
wherein the curing of the molding material mixture
- is assisted or brought about by heating the shaped molding material mixture, preferably by heating in a heated shaping mold, preferably in a heated shaping mold with a temperature in the range from 100 to 300°C, and/or by gassing with hot air, where the heating and/or the gassing preferably establishes a temperature in the range from 120 to 180°C at least in regions of the shaped molding material mixture,
- is assisted or brought about by the hydrolysis of an ester, where at least one of the esters is preferably selected from the group consisting of the intramolecular or intermolecular reaction products of an alcohol and an acid, where
the alcohol is selected from the group consisting of C1-C8 monoalcohols, C1-C8 dialcohols, preferably C2-C8 dialcohols, and C1-C8 trialcohols, preferably C3-C8 trialcohols, preferably selected from the group consisting of ethylene glycol, propane-1,2-diol and glycerol,
and
the acid is selected from the group consisting of organic C2-C8 monocarboxylic acids, organic C2-C8 dicarboxylic acids, organic C2-C8 tricarboxylic acids, preferably organic C4-C8 tricarboxylic acids, and inorganic acids, preferably selected from the group consisting of formic acid, acetic acid, propionic acid, lactic acid, oxalic acid, succinic acid, malonic acid, phosphoric acid, sulfuric acid, boric acid and carbonic acid,
where at least one of the esters is preferably propylene carbonate or y-butyrolactone,
or
- is assisted or brought about by gassing of the shaped molding material mixture with a gas or gas mixture containing less than 1 mol% of CO₂.

8. The process as claimed in any of the preceding claims, wherein the casting mold produced or the core produced is heated temporarily at least in regions to a temperature of > 900°C such that the breakdown is subsequently facilitated, preferably with heating to a temperature of < 1600°C, more preferably to a temperature in the range between 900°C and 1600°C,
and/or
wherein the casting mold produced or the core produced is heated temporarily at least in regions, by contacting with a metal melt in the casting operation, to a temperature of > 900°C such that the breakdown is subsequently facilitated, preferably with heating to a temperature of < 1600°C, more preferably to a temperature in the range between 900°C and 1600°C, preferably using a metal melt consisting of iron, iron alloys, steel, steel alloys, brass or brass alloys.

9. The process as claimed in claim 8 for production of a regenerated mold base material from the casting mold produced or the core produced after the heating, comprising the following additional steps:
- acting mechanically on the casting mold produced or the core produced, such that the casting mold or core breaks down,
- producing the regenerated mold base material from the broken-down casting mold or the broken-down core, preferably comprising the separating-off and removing of dust, wherein the separating-off preferably comprises a physical separation.

10. The process as claimed in any of the preceding claims, wherein the molding material mixture provided or produced contains a proportion of regenerated mold base material produced as claimed in claim 9
and/or
wherein the shaping of the molding material mixture and/or the curing of the molding material mixture is effected by means of a 3D printer
and/or
wherein the shaping of the molding material mixture is effected in a 3D printing method and the curing of the molding material mixture is effected during the 3D printing operation and/or after the 3D printing operation.

11. A mixture for combination with a solution or dispersion comprising waterglass for production of casting molds and/or cores, comprising
- 10% to 98% by weight of particulate amorphous silicon dioxide, preferably fumed particulate amorphous silicon dioxide,
- 0% to 15% by weight of graphite,
- one or more particulate mixed metal oxides, each comprising at least one oxide of aluminum and/or at least one oxide of zirconium, in a total amount of 0% to 80% by weight,
and, to facilitate the breakdown and/or to increase the regeneratability of the casting mold or the core,
- one or more particulate sheet silicates in a total amount of 2% to 80% by weight, where the d₉₀ of the total amount of sheet silicates is less than 45 µm, i.e. that 90% of the particulate sheet silicates are smaller than 45 µm, where the d₉₀ is determined by means of scanning electron microscope,
where the percentages are based on the total mass of the mixture,
where the mixture is preferably a solid-state mixture or a dispersion composed of two or more phases.

12. The process as claimed in claim 11, comprising
- 25% to 95% by weight, preferably 40% to 95% by weight of particulate amorphous silicon dioxide, preferably fumed particulate amorphous silicon dioxide,
- 1.5% to 12.5% by weight, preferably 1.5% to 6% by weight of graphite,
- one or more particulate mixed metal oxides, each comprising at least one oxide of aluminum and/or at least one oxide of zirconium, in a total amount of 0% to 65.5%, preferably 0% to 45% by weight,
- one or more particulate sheet silicates in a total amount of 5% to 50% by weight, preferably 15% to 50% by weight, where the d₉₀ of the total amount is smaller than 45 µm, as defined in claim 11.
where the percentages are based on the total mass of the mixture,
where the mixture is preferably a solid-state mixture or a dispersion composed of two or more phases.

13. A multicomponent binder system comprising, as spatially separate or mutually mixed components,
(A) mixture as claimed in claim 11 or 12,
(B) a solution or dispersion comprising waterglass, preferably a waterglass having a modular SiO₂/M₂O modulus in the range from 1.6 to 4.0, preferably 1.8 to 2.5, where M₂O denotes the total amount of lithium oxide, sodium oxide and potassium oxide.

14. A molding material mixture comprising
- at least component (A), a mixture as claimed in claim 12 and as defined in claim 13, and component (B) as defined in claim 13
and
- as component (D) a refractory mold base material, preferably comprising, as refractory mold base material or as constituent of the refractory mold base material, a regenerated mold base material, said regenerated mold base material more preferably being producible by a process as claimed in claim 9.

15. The use of a mixture as claimed in claim 11 or 12 as additive for production of a molding material mixture comprising waterglass and particulate amorphous silicon dioxide, preferably fumed particulate amorphous silicon dioxide, which is cured by chemical reaction of constituents of the molding material mixture with one another,
in the production of a casting mold or a core,
to facilitate the breakdown and/or to increase the regeneratability of the casting mold or core.

## Revendications

1. Procédé de fabrication de moules de coulée, de noyaux et de matières de base de moulage régénérées à partir de ceux-ci, avec les étapes suivantes pour la fabrication d'un moule de coulée ou d'un noyau :
- la fourniture ou fabrication d'un mélange de matières de moulage comprenant
- un matière de base de moulage
- une solution ou dispersion comprenant du verre soluble
- 0,1 à 3 % en poids de dioxyde de silicium amorphe particulaire ainsi que, pour faciliter la décomposition et/ou pour augmenter la régénérabilité du moule de coulée ou du noyau,
- un ou plusieurs phyllosilicates particulaires dans une quantité totale de 0,05 à 0,4% en poids, dans lequel la valeur d₉₀ de la quantité totale des phyllosilicates est inférieure à 45 µm, c'est-à-dire que 90 % des particules de phyllosilicate contenues dans le mélange de matières de moulage sont inférieures à 45 µm, dans lequel la valeur d₉₀ est déterminée par des prises de vues avec le microscope électronique à balayage,
dans lequel
les pourcentages se rapportent respectivement à la masse totale du mélange de matières de moulage,
- le moulage du mélange de matières de moulage,
- le durcissement du mélange de matières de moulage par réaction chimique entre les constituants de ce mélange, de sorte qu'il en résulte le moule de coulée ou le noyau.

2. Procédé selon l'une quelconque des revendications précédentes, dans lequel le verre soluble dans le mélange de matières de moulage présente un module molaire SiO₂/M₂O dans la plage de 1,6 à 4,0, de préférence dans la plage de 1,8 à 2,5, dans lequel M₂O désigne la quantité totale d'oxyde de lithium, de sodium et de potassium.

3. Procédé selon l'une quelconque des revendications précédentes, dans lequel le diamètre moyen des particules de matières de base de moulage se situe dans la plage de 100 µm à 600 µm.

4. Procédé selon l'une quelconque des revendications précédentes, dans lequel le mélange de matières de moulage comprend du dioxyde de silicium amorphe particulaire pyrogène et/ou le dioxyde de silicium amorphe particulaire est un dioxyde de silicium amorphe particulaire pyrogène.

5. Procédé selon l'une quelconque des revendications précédentes, dans lequel les un ou plusieurs phyllosilicates particulaires sont contenus dans le mélange de matières de moulage en une quantité totale de 0,1 à 0,4 % en poids, de préférence de 0,1 à 0,3 % en poids.

6. Procédé selon l'une quelconque des revendications précédentes, comprenant la fourniture ou fabrication d'un mélange de matières de moulage comprenant
- la matière de base de moulage,
- la solution ou dispersion comprenant du verre soluble,
- les un ou plusieurs phyllosilicates particulaire en une quantité totale de 0,1 à 0,4 % en poids, de préférence 0,1 à 0,3 % en poids,
- 0,3 à 3 % en poids, de préférence 0,57 à 0,77 % en poids, du dioxyde de silicium amorphe particulaire, de préférence dioxyde de silicium amorphe particulaire pyrogène, et
- 0,01 à 1 % en poids de graphite
dans lequel les pourcentages sont respectivement rapportés à la masse totale du mélange de matières de moulage.

7. Procédé selon l'une quelconque des revendications précédentes,
dans lequel la matière de base de moulage comprend de préférence au moins 50 % en poids, de manière particulièrement préférée au moins 80 % en poids, de sable de quartz, par rapport à la masse totale de matière de base de moulage
et/ou
dans lequel le durcissement du mélange de matières de moulage
- est soutenu ou provoqué par chauffage du mélange de matières de moulage moulé, de préférence par chauffage dans un moule chauffé, de préférence dans un moule chauffé à une température dans la plage de 100 à 300 °C, et/ou par gazage avec de l'air chaud, dans lequel une température dans la plage de 120 à 180 °C est réglée de préférence par le chauffage et/ou le gazage au moins dans des zones du mélange de matières de moulage moulé,
- est soutenu ou provoqué par la saponification d'un ester, dans lequel de préférence au moins l'un des esters est choisi dans le groupe constitué par les produits de réaction intramoléculaire ou intermoléculaire d'un alcool et d'un acide, dans lequel
l'alcool est choisi dans le groupe constitué par les monoalcools C1-C8, les dialcools C1-C8, de préférence les dialcools C2-C8, et les trialcools C1-C8, de préférence les trialcools C3-C8, et est de préférence choisi dans le groupe constitué par l'éthylène glycol, le 1,2-propanediol et la glycérine et
l'acide est choisi dans le groupe constitué par les monoacides carboxyliques organiques C2-C8, les diacides carboxyliques organiques C2-C8, les triacides carboxyliques organiques C2-C8, de préférence les triacides carboxyliques organiques C4-C8, et les acides inorganiques, de préférence choisis dans le groupe constitué par l'acide formique, l'acide acétique, l'acide propionique, l'acide lactique, l'acide oxalique, l'acide succinique, l'acide malonique, l'acide phosphorique, l'acide sulfurique, l'acide borique et l'acide carbonique
dans lequel de préférence au moins l'un des esters est le carbonate de propylène ou la y-butyrolactone
ou
- est soutenu ou obtenu par gazage du mélange de matières de moulage moulé avec un gaz ou mélange de gaz qui contient moins de 1 % en moles de CO₂.

8. Procédé selon l'une quelconque des revendications précédentes, dans lequel le moule de coulée fabriqué ou le noyau fabriqué est chauffé au moins temporairement dans des zones à une température > 900 °C de manière à faciliter ensuite la décomposition, dans lequel de préférence le chauffage a lieu à une température < 1600 °C, de manière particulièrement préférée à une température dans la plage comprise entre 900 °C et 1600 °C
et/ou
dans lequel le moule de coulée fabriqué ou le noyau fabriqué est temporairement chauffé à une température > 900 °C lors de la coulée au moins dans certaines zones par mise en contact avec une fonte métallique, de manière à faciliter ensuite la décomposition, dans lequel le chauffage a lieu de préférence à une température < 1600 °C, de manière particulièrement préférée à une température dans la plage comprise entre 900 °C et 1600 °C, dans lequel de préférence une fonte métallique, qui est constituée de fer, d'alliages de fer, d'acier, d'alliages d'acier, de laiton ou d'alliages de laiton, est utilisée.

9. Procédé selon la revendication 8, pour la fabrication d'une matière de base de moulage régénérée à partir du moule de coulée fabriqué ou du noyau fabriqué après le chauffage, avec les étapes supplémentaires suivantes :
- une action mécanique sur le moule de coulée fabriqué ou le noyau fabriqué de sorte que le moule de coulée ou le noyau se décompose,
- la fabrication de la matière de base de moulage régénérée à partir du moule de coulée décomposé ou du noyau décomposé, comprenant de préférence la séparation et l'élimination de la poussière, dans lequel la séparation inclut de préférence une séparation physique.

10. Procédé selon l'une quelconque des revendications précédentes, dans lequel le mélange de matières de moulage fourni ou fabriqué contient une proportion de matière de base de moulage régénérée, qui est fabriquée conformément à la revendication 9
et/ou
dans lequel le moulage du mélange de matières de moulage et/ou le durcissement du mélange de matières de moulage s'effectuent à l'aide d'une imprimante 3D
et/ou
dans lequel le moulage du mélange de matières de moulage s'effectue dans un procédé d'impression 3D et le durcissement du mélange de matières de moulage s'effectue pendant le processus d'impression 3D et/ou après le processus d'impression 3D.

11. Mélange à combiner avec une solution ou dispersion comprenant du verre soluble, pour la fabrication de moules de coulée et/ou de noyaux, comprenant
- 10 à 98 % en poids de dioxyde de silicium amorphe particulaire, de préférence dioxyde de silicium amorphe particulaire pyrogène,
- 0 à 15 % en poids de graphite,
- un ou plusieurs oxydes métalliques mixtes particulaires, comprenant chacun au moins un oxyde d'aluminium et/ou au moins un oxyde de zirconium, en une quantité totale de 0 à 80 % en poids,
ainsi que, pour faciliter la décomposition et/ou pour augmenter la régénérabilité du moule de coulée ou du noyau,
- un ou plusieurs phyllosilicates particulaires en une quantité totale de 2 à 80 % en poids, dans lequel la valeur d₉₀ de la quantité totale des phyllosilicates est inférieure à 45 µm, c'est-à-dire que 90 % des particules de phyllosilicate sont inférieures à 45 µm, dans lequel la valeur d₉₀ est déterminée par des prises de vue avec le microscope électronique à balayage,
dans lequel les pourcentages sont rapportés à la masse totale du mélange,
dans lequel le mélange est de préférence un mélange solide ou une dispersion à deux phases ou plus.

12. Mélange selon la revendication 11, comprenant :
- 25 à 95 % en poids, de préférence 40 à 95 % en poids, de dioxyde de silicium amorphe particulaire, de préférence de dioxyde de silicium amorphe particulaire pyrogène,
- 1,5 à 12,5 % en poids, de préférence 1,5 à 6 % en poids, de graphite,
- un ou plusieurs oxydes métalliques mixtes particulaires, comprenant chacun au moins un oxyde d'aluminium et/ou au moins un oxyde de zirconium, en une quantité totale de 0 à 65,5 % en poids, de préférence de 0 à 45 % en poids,
- un ou plusieurs phyllosilicates particulaires en une quantité totale de 5 à 50 % en poids, de préférence 15 à 50 % en poids, dans lequel la valeur d₉₀ de la quantité totale des phyllosilicates est inférieure à 45 µm, comme défini dans la revendication 11,
dans lequel les pourcentages sont rapportés à la masse totale du mélange,
dans lequel le mélange est de préférence un mélange solide ou une dispersion à deux phases ou plus.

13. Système de liant multicomposant comprenant des composants présents de manière séparée dans l'espace,
(A) le mélange selon la revendication 11 ou 12,
(B) une solution ou dispersion comprenant du verre soluble, de préférence un verre soluble avec un module molaire SiO₂/M₂O dans la plage de 1,6 à 4,0, de préférence 1,8 à 2,5, dans lequel M₂O désigne la quantité totale d'oxyde de lithium, de sodium et de potassium.

14. Mélange de matières de moulage comprenant
- au moins un composant (A), un mélange selon la revendication 12 tel que défini dans la revendication 13 et un composant (B) tel que défini dans la revendication 13
ainsi que,
- en tant que composant (D), une matière de base de moulage réfractaire,
comprenant de préférence, en tant que matière de base de moulage réfractaire ou en tant que constituant de la matière de base de moulage réfractaire, une matière de base de moulage régénérée, dans lequel cette matière de base de moulage régénérée peut, de manière particulièrement préférée, être fabriquée par un procédé selon la revendication 9.

15. Utilisation d'un mélange selon la revendication 11 ou 12 comme additif pour la fabrication d'un mélange de matières de moulage comprenant du verre soluble et du dioxyde de silicium amorphe particulaire, de préférence du dioxyde de silicium amorphe particulaire pyrogène, qui est durci par réaction chimique de constituants du mélange de matières de moulage,
lors de la fabrication d'un moule de coulée ou d'un noyau,
pour faciliter la décomposition et/ou pour augmenter la régénérabilité du moule de coulée ou du noyau.
